# EUROPEAN PATENT APPLICATION

(11) **EP 4 836 305 A1**
(43) Date of publication of application: **04.11.2026**
(21) Application number: 24921601.1
(22) Date of filing: 05.11.2024
(51) Int. Cl.: H04B 1/04

(54) **RADIO FREQUENCY CIRCUIT, RADIO FREQUENCY SYSTEM AND COMMUNICATION DEVICE**

(30) Priority: 02.02.2024 CN 202410162416
(71) Applicant: Huawei Technologies Co., Ltd., Shenzhen, Guangdong 518129 (CN)
(72) Inventor: ZHANG, Peng, Shenzhen, Guangdong 518129 (CN); SHI, Huaping, Shenzhen, Guangdong 518129 (CN)
(74) Representative: Huawei European IPR
(86) International application number: PCT/CN2024/129944
(87) International publication number: WO 2025/161577

(57) **Abstract**

Embodiments of this application provide a radio frequency circuit, a radio frequency system, and a communication device. When disposed in the radio frequency system, the radio frequency circuit can be compatible with a baseband chip that is in the radio frequency system and that supports receiving baseband receive signals of different frequency bands and outputting baseband transmit signals of different frequency bands. The radio frequency circuit includes a power amplifier circuit, a low-noise amplifier circuit, and a first switch. The radio frequency circuit includes a transmit port, a receive port, and an antenna port. The first switch includes a first end, a second end, a third end, and a fourth end. The transmit port of the radio frequency circuit is connected to an input end of the power amplifier circuit, and the receive port of the radio frequency circuit is connected to an output end of the low-noise amplifier circuit. An output end of the power amplifier circuit is connected to the first end of the first switch, and an input end of the low-noise amplifier circuit is connected to the second end of the first switch. The third end and the fourth end of the first switch are separately connected to the antenna port of the radio frequency circuit.

## Description

This application claims priority to Chinese Patent Application No. 202410162416.7, filed with the China National Intellectual Property Administration on February 2, 2024 and entitled "RADIO FREQUENCY CIRCUIT, RADIO FREQUENCY SYSTEM, AND COMMUNICATION DEVICE", which is incorporated herein by reference in its entirety.

### TECHNICAL FIELD

This application relates to the field of wireless communication technologies, and in particular, to a radio frequency circuit, a radio frequency system, and a communication device.

### BACKGROUND

In a wireless communication system, a communication device includes a station and an access point device, and communication may be performed between a station and an access point device, between stations, and between access point devices. Specifically, a radio frequency system is disposed in the station, and a radio frequency system is also disposed in the access point device. The radio frequency system is configured to receive a radio frequency receive signal or output a radio frequency transmit signal to implement communication.

The radio frequency system includes a baseband chip and a radio frequency circuit. When the radio frequency system receives a radio frequency receive signal, the radio frequency circuit receives the radio frequency receive signal, and outputs a baseband receive signal to the baseband chip based on the radio frequency receive signal. The baseband chip parses transmission data based on the baseband receive signal. When the radio frequency system outputs a radio frequency transmit signal, the baseband chip outputs a baseband transmit signal to the radio frequency circuit based on the transmission data. The radio frequency circuit outputs the radio frequency transmit signal based on the baseband transmit signal.

With development of radio frequency systems, currently, baseband chips in most radio frequency systems can support receiving baseband receive signals of different frequency bands and outputting baseband transmit signals of different frequency bands. Therefore, a new radio frequency circuit also needs to be designed to be compatible with the baseband chips.

### SUMMARY

Embodiments of this application provide a radio frequency circuit, a radio frequency system, and a communication device. When disposed in the radio frequency system, the radio frequency circuit can be compatible with a baseband chip that is in the radio frequency system and that supports receiving baseband receive signals of different frequency bands and outputting baseband transmit signals of different frequency bands.

According to a first aspect, a radio frequency circuit is provided. The radio frequency circuit includes a power amplifier circuit, a low-noise amplifier circuit, and a first switch. The radio frequency circuit includes a transmit port, a receive port, and an antenna port. The first switch includes a first end, a second end, a third end, and a fourth end. The transmit port of the radio frequency circuit is connected to an input end of the power amplifier circuit, and the receive port of the radio frequency circuit is connected to an output end of the low-noise amplifier circuit. An output end of the power amplifier circuit is connected to the first end of the first switch, and an input end of the low-noise amplifier circuit is connected to the second end of the first switch. The third end and the fourth end of the first switch are separately connected to the antenna port of the radio frequency circuit. In the radio frequency circuit, because the first switch is disposed, the first switch includes the third end and the fourth end, and the third end and the fourth end of the first switch are separately connected to the antenna port of the radio frequency circuit. Therefore, when disposed in a radio frequency system, the radio frequency circuit can be compatible with a baseband chip that supports receiving baseband receive signals of different frequency bands and outputting baseband transmit signals of different frequency bands in the radio frequency system.

Optionally, the antenna port includes a first antenna port and a second antenna port; the third end of the first switch is connected to the first antenna port of the radio frequency circuit; and the fourth end of the first switch is connected to the second antenna port of the radio frequency circuit. In this optional manner, the radio frequency circuit may choose to output a radio frequency transmit signal from the first antenna port or the second antenna port, or may choose to receive a radio frequency receive signal from the first antenna port or the second antenna port, thereby improving flexibility of the radio frequency circuit.

Optionally, the first switch is configured to electrically connect the first end to the third end; and the power amplifier circuit is configured to: receive a first baseband transmit signal input through the transmit port, and output a first radio frequency transmit signal to the first antenna port based on the first baseband transmit signal. Alternatively, the first switch is configured to electrically connect the first end to the fourth end; and the power amplifier circuit is configured to: receive a second baseband transmit signal input through the transmit port, and output a second radio frequency transmit signal to the second antenna port based on the second baseband transmit signal. Alternatively, the first switch is configured to electrically connect the second end to the third end; and the low-noise amplifier circuit is configured to: receive a first radio frequency receive signal input through the first antenna port, and output a first baseband receive signal to the receive port based on the first radio frequency receive signal. Alternatively, the first switch is configured to electrically connect the second end to the fourth end; and the low-noise amplifier circuit is configured to: receive a second radio frequency receive signal input through the second antenna port, and output a second baseband receive signal to the receive port based on the second radio frequency receive signal.

Optionally, the antenna port further includes at least one third antenna port, and the first switch further includes at least one fifth end; and one fifth end of the first switch is connected to a corresponding third antenna port of the radio frequency circuit. In this optional manner, the radio frequency circuit may choose to output a radio frequency transmit signal from the first antenna port, the second antenna port, or any third antenna port, or may choose to receive a radio frequency receive signal from the first antenna port, the second antenna port, or any third antenna port, thereby further improving flexibility of the radio frequency circuit.

Optionally, the first switch is configured to electrically connect the first end to the one fifth end; and the power amplifier circuit is configured to: receive a third baseband transmit signal input through the transmit port, and output a third radio frequency transmit signal to the corresponding third antenna port based on the third baseband transmit signal. Alternatively, the first switch is configured to electrically connect the second end to the one fifth end; and the low-noise amplifier circuit is configured to: receive a third radio frequency receive signal input through the corresponding third antenna port, and output a third baseband receive signal to the receive port based on the third radio frequency receive signal.

Optionally, the radio frequency circuit further includes a first filter, where the third end of the first switch is connected to the first antenna port of the radio frequency circuit through the first filter. In this optional manner, a filter is further integrated into the radio frequency circuit, so that the radio frequency circuit has a higher integration level.

Optionally, the radio frequency circuit further includes at least one second filter, the antenna port further includes at least one third antenna port, and the first switch further includes at least one fifth end; and one fifth end of the first switch is connected to a corresponding third antenna port of the radio frequency circuit through one second filter.

Optionally, the radio frequency circuit further includes a first filter and a second switch; the second switch includes a sixth end, a seventh end, and an eighth end; the third end of the first switch is connected to the sixth end of the second switch through the first filter; the fourth end of the first switch is connected to the seventh end of the second switch; and the eighth end of the second switch is connected to the antenna port of the radio frequency circuit. In this optional manner, the radio frequency circuit may include the first filter and the second switch, and include one antenna port, so that the radio frequency circuit has a higher integration level. In addition, when the radio frequency circuit outputs a radio frequency transmit signal or receives a radio frequency receive signal, only two switches: the first switch and the second switch, are included in a signal transmission path, so that an insertion loss of the radio frequency circuit can be reduced.

Optionally, the first switch is configured to electrically connect the first end to the third end; the second switch is configured to electrically connect the eighth end to the sixth end; the power amplifier circuit is configured to: receive a first baseband transmit signal input through the transmit port, and output a first radio frequency transmit signal to the first filter based on the first baseband transmit signal; and the first filter is configured to output the filtered first radio frequency transmit signal to the antenna port. Alternatively, the first switch is configured to electrically connect the first end to the fourth end; the second switch is configured to electrically connect the eighth end to the seventh end; and the power amplifier circuit is configured to: receive a second baseband transmit signal input through the transmit port, and output a second radio frequency transmit signal to the antenna port based on the second baseband transmit signal. Alternatively, the first switch is configured to electrically connect the second end to the third end; the second switch is configured to electrically connect the eighth end to the sixth end; the first filter is configured to: receive a first radio frequency receive signal input through the antenna port, and output the filtered first radio frequency receive signal to the low-noise amplifier circuit; and the low-noise amplifier circuit is configured to output a first baseband receive signal to the receive port based on the first radio frequency receive signal. Alternatively, the first switch is configured to electrically connect the second end to the fourth end; the second switch is configured to electrically connect the eighth end to the seventh end; and the low-noise amplifier circuit is configured to: receive a second radio frequency receive signal input through the antenna port, and output a second baseband receive signal to the receive port based on the second radio frequency receive signal.

Optionally, the radio frequency circuit further includes at least one second filter; the first switch further includes at least one fifth end, and the second switch further includes at least one ninth end; and one fifth end of the first switch is connected to a corresponding ninth end of the second switch through one second filter.

Optionally, the first switch is configured to electrically connect the first end to the one fifth end; the second switch is configured to electrically connect the eighth end to the corresponding ninth end; the power amplifier circuit is configured to: receive a third baseband transmit signal input through the transmit port, and output a third radio frequency transmit signal to the corresponding second filter based on the third baseband transmit signal; and the corresponding second filter is configured to output the filtered third radio frequency transmit signal to the antenna port. Alternatively, the first switch is configured to electrically connect the second end to the one fifth end; the second switch is configured to electrically connect the eighth end to the corresponding ninth end. The corresponding second filter is configured to: receive a third radio frequency receive signal input through the antenna port, and output the filtered third radio frequency receive signal to the low-noise amplifier circuit. The low-noise amplifier circuit is configured to output a third baseband receive signal to the receive port based on the third radio frequency receive signal.

Optionally, the low-noise amplifier circuit includes a low-noise amplifier, an attenuator, and a third switch; the attenuator and the third switch are connected in series between the input end of the low-noise amplifier circuit and the output end of the low-noise amplifier circuit; and the low-noise amplifier is connected between the input end of the low-noise amplifier circuit and the output end of the low-noise amplifier circuit.

According to a second aspect, a radio frequency system is provided. The radio frequency system includes a baseband chip and at least one radio frequency circuit according to any one of the implementations of the first aspect. The radio frequency system further includes a common antenna port. The baseband chip is connected to the transmit port and the receive port of the radio frequency circuit. The common antenna port of the radio frequency system is connected to the antenna port of the radio frequency circuit.

Optionally, the common antenna port of the radio frequency system includes a first common antenna port and a second common antenna port; the antenna port of the radio frequency circuit includes the first antenna port and the second antenna port; and the first antenna port is connected to the first common antenna port, and the second antenna port is connected to the second common antenna port.

Optionally, the radio frequency system further includes a third filter, and the first antenna port is connected to the first common antenna port through the third filter.

Optionally, the radio frequency system further includes a third filter and a fourth switch; the fourth switch includes a tenth end, an eleventh end, and a twelfth end; the antenna port of the radio frequency circuit includes the first antenna port and the second antenna port; the first antenna port is connected to the tenth end of the fourth switch through the third filter, the second antenna port is connected to the eleventh end of the fourth switch; and the twelfth end of the fourth switch is connected to the common antenna port of the radio frequency system.

Optionally, the radio frequency system further includes a fourth switch, and the fourth switch includes a tenth end, an eleventh end, and a twelfth end; the radio frequency circuit includes the first filter, and the antenna port of the radio frequency circuit includes the first antenna port and the second antenna port; the first antenna port is connected to the tenth end of the fourth switch; the second antenna port is connected to the eleventh end of the fourth switch; and the twelfth end of the fourth switch is connected to the common antenna port of the radio frequency system.

According to a third aspect, a communication device is provided. The communication device includes an antenna and the radio frequency system according to any one of the implementations of the second aspect. The antenna is connected to the common antenna port of the radio frequency system.

For technical effects achieved by any one of the possible implementations of the second aspect and the third aspect, refer to technical effects achieved by different implementations of the first aspect. Details are not described herein again.

### BRIEF DESCRIPTION OF DRAWINGS

FIG. 1 is a diagram of a structure of a communication system according to an embodiment of this application;
FIG. 2 is a diagram of a structure of a radio frequency system according to an embodiment of this application;
FIG. 3 is a diagram of a structure of a radio frequency circuit according to an embodiment of this application;
FIG. 4 is a diagram of a structure of a radio frequency system according to another embodiment of this application;
FIG. 5 is a diagram of a structure of a radio frequency circuit according to still another embodiment of this application;
FIG. 6 is a diagram of a structure of a radio frequency circuit according to yet another embodiment of this application;
FIG. 7 is a diagram of a structure of a radio frequency circuit according to another embodiment of this application;
FIG. 8 is a diagram of a structure of a radio frequency circuit according to still another embodiment of this application;
FIG. 9 is a diagram of a structure of a radio frequency circuit according to yet another embodiment of this application;
FIG. 10 is a diagram of a structure of a radio frequency circuit according to another embodiment of this application;
FIG. 11 is a diagram of a structure of a radio frequency circuit according to still another embodiment of this application;
FIG. 12 is a diagram 1 of a structure of a first switch in a radio frequency circuit according to an embodiment of this application;
FIG. 13 is a diagram 2 of a structure of a first switch in a radio frequency circuit according to an embodiment of this application;
FIG. 14 is a diagram of a structure of a radio frequency system according to still another embodiment of this application;
FIG. 15 is a diagram of a structure of a communication device according to an embodiment of this application;
FIG. 16 is a diagram of a structure of a radio frequency system according to yet another embodiment of this application;
FIG. 17 is a diagram of a structure of a radio frequency system according to another embodiment of this application;
FIG. 18 is a diagram of a structure of a radio frequency system according to still another embodiment of this application;
FIG. 19 is a diagram of a structure of a radio frequency system according to yet another embodiment of this application;
FIG. 20 is a diagram of a structure of a radio frequency system according to another embodiment of this application;
FIG. 21 is a diagram of a structure of a radio frequency system according to still another embodiment of this application;
FIG. 22 is a diagram of a structure of a radio frequency system according to yet another embodiment of this application;
FIG. 23 is a diagram of a structure of a radio frequency system according to another embodiment of this application; and
FIG. 24 is a diagram of a structure of a radio frequency system according to still another embodiment of this application.

### DESCRIPTION OF EMBODIMENTS

The following describes the technical solutions in embodiments of this application with reference to the accompanying drawings in embodiments of this application. Clearly, the described embodiments are merely a part rather than all of embodiments of this application.

Unless otherwise defined, all technical terms used herein have the same meaning as those commonly known to a person of ordinary skill in the art. In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. The term "at least one of the following items (pieces)" or an expression similar to the term indicates any combination of the items, and includes a single item (piece) or any combination of a plurality of items (pieces). For example, at least one of a, b, or c may indicate a, b, c, a and b, a and c, b and c, or a, b and c, where a, b, and c may be in a singular form or a plural form. In addition, in embodiments of this application, words such as "first" and "second" do not limit a quantity or an order.

In addition, in embodiments of this application, orientation terms such as "above" and "below" are defined relative to placement orientations of components shown in the accompanying drawings. It should be understood that these directional terms are relative concepts that are used for relative description and clarification, and may vary correspondingly based on changes in the placement orientations of the components in the accompanying drawings.

In embodiments of this application, the term "example", "for example", or the like is used to give an example, an illustration, or a description. Any embodiment or design solution described as "example" or "for example" in embodiments of this application shall not be construed as being more preferred or having more advantages than another embodiment or design solution. To be precise, the words such as "example" or "for example" are intended to present a related concept in a specific manner.

The following describes the technical solutions in embodiments of this application with reference to the accompanying drawings in embodiments of this application. Clearly, the described embodiments are merely a part rather than all of embodiments of this application.

The following describes implementations of embodiments of this application in detail with reference to accompanying drawings in this specification.

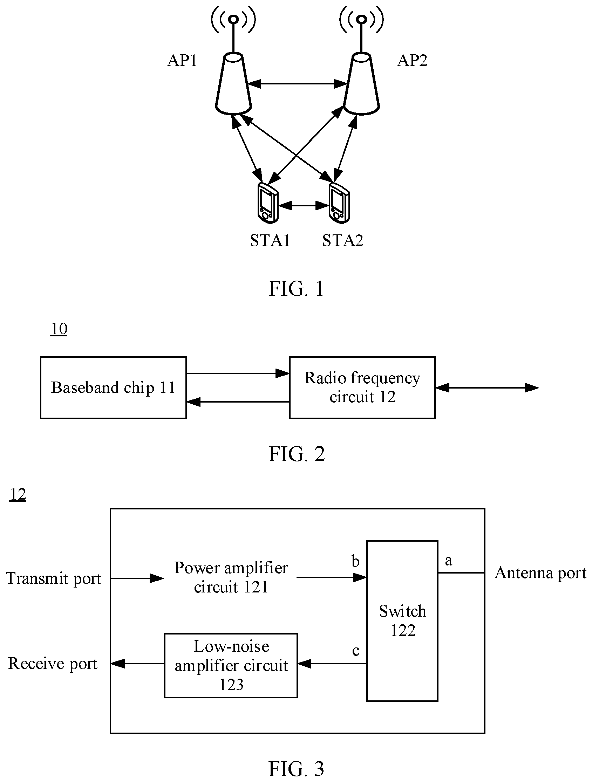

Refer to FIG. 1. FIG. 1 is a diagram of a structure of a communication system according to an embodiment of this application. The communication system includes a communication device. The communication device may be, for example, an access point (station) device STA1, an access point device STA2, a station (access point) device AP1, and a station AP2 shown in FIG. 1. The access point device STA1 may communicate with one or more of the access point device STA2, the station AP1, and the station AP2. The access point device STA2 may communicate with one or more of the access point device STA1, the station AP1, and the station AP2. The station AP1 may communicate with one or more of the access point device STA1, the access point device STA2, and the station AP2. The station AP2 may communicate with one or more of the access point device STA1, the access point device STA2, and the station AP1.

For example, communication between communication devices in the communication system shown in FIG. 1 meets a requirement of a wireless local area network (wireless local area network, WLAN) in a related standard of the Institute of Electrical and Electronics Engineers (Institute of Electrical and Electronics Engineers, IEEE). The IEEE-related standards include: the 802.11a/b/g standard, the 802.11n standard, the 802.11ac standard, the 802.11ax standard, 802.11be standard, the 802.11bn standard/UHR standard/Wi-Fi8 standard, the 802.11ad standard, the 802.11ay standard, the 802.11bf standard/sensing standard, the UWB standard/802.15 standard, and the like. This is not limited.

For example, the station AP1 and/or the station AP2 may be a device that supports a plurality of WLAN standards, such as the 802.11be standard or a future Wi-Fi standard, or may be a device that supports the 802.11a/b/g standard, the 802.11n standard, the 802.11ac standard, the 802.11ax standard, the 802.11be standard, and the 802.11bn standard/UHR standard/Wi-Fi8 standard. This is not limited.

For example, the station AP1 and/or the station AP2 may be a terminal device, a network device, a communication server, a router, a switch, a bridge, a computer, or the like that has a Wi-Fi chip. The station AP1 and/or the station AP2 may alternatively be an access point for a mobile user to access a wired network, and is mainly deployed in a home, a building, or a campus. A typical coverage radius is tens of meters to hundreds of meters. Certainly, the station AP1 and/or the station AP2 may alternatively be deployed outdoors. The station AP1 and/or the station AP2 are/is equivalent to bridges/a bridge that connect/connects a wired network and a wireless network, and are/is mainly configured to connect wireless network clients together, and then connect the wireless network to the Ethernet.

For example, the access point device STA1 and/or the access point device STA2 may be a device that supports a plurality of WLAN standards such as the 802.11be standard or a future Wi-Fi standard, or may be a device that supports the 802.11a/b/g standard, the 802.11n standard, the 802.11ac standard, the 802.11ax standard, the 802.11be standard, the 802.11bn standard/UHR standard/Wi-Fi8 standard. This is not limited.

For example, the access point device STA1 and/or the access point device STA2 may be a wireless communication chip, a wireless sensor, a wireless communication terminal, a communication server, a router, a switch, a bridge, a computer, or the like. For example, the access point device STA1 and/or the access point device STA2 may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, a computer that supports a Wi-Fi communication function, or the like. This is not limited.

Specifically, a radio frequency system is disposed in the foregoing communication device. The radio frequency system is configured to receive a radio frequency receive signal or output a radio frequency transmit signal, to implement communication between the communication device and another communication device.

Refer to FIG. 2. An embodiment of this application provides a diagram of a structure of a radio frequency system 10. The radio frequency system 10 includes a baseband chip 11 and a radio frequency circuit 12. The baseband chip 11 is connected to a transmit port and a receive port of the radio frequency circuit 12. For example, when the radio frequency system 10 receives a radio frequency receive signal, the radio frequency circuit 12 receives the radio frequency receive signal, and outputs a baseband receive signal to the baseband chip 11 based on the radio frequency receive signal. The baseband chip 11 receives the baseband receive signal, and parses transmission data based on the baseband receive signal. When the radio frequency system 10 outputs a radio frequency transmit signal, the baseband chip 11 outputs a baseband transmit signal to the radio frequency circuit 12 based on the transmission data. The radio frequency circuit 12 outputs the radio frequency transmit signal based on the baseband transmit signal.

For example, refer to FIG. 3. The radio frequency circuit 12 includes a power amplifier circuit 121, a switch 122, and a low-noise amplifier circuit 123. The radio frequency circuit 12 includes a transmit port, a receive port, and an antenna port. Specifically, the transmit port of the radio frequency circuit 12 is connected to an input end of the power amplifier circuit 121, an output end of the power amplifier circuit 121 is connected to an end b of the switch 122, an end a of the switch 122 is connected to the antenna port of the radio frequency circuit 12, an end c of the switch 122 is connected to an input end of the low-noise amplifier circuit 123, and an output end of the low-noise amplifier circuit 123 is connected to the receive port of the radio frequency circuit 12.

Specifically, when the radio frequency circuit 12 receives the radio frequency receive signal, the radio frequency receive signal is specifically input from the antenna port of the radio frequency circuit 12. The switch 122 is configured to electrically connect the end a of the switch 122 to the end c of the switch 122, so as to transmit the radio frequency receive signal to the low-noise amplifier circuit 123. The low-noise amplifier circuit 123 is configured to output the baseband receive signal to the receive port of the radio frequency circuit 12 based on the radio frequency receive signal. When the radio frequency circuit 12 outputs the radio frequency transmit signal, the switch 122 is configured to electrically connect the end a of the switch 122 to the end b of the switch 122, and the power amplifier circuit 121 is configured to: receive the baseband transmit signal input through the transmit port of the radio frequency circuit 12, and output the radio frequency transmit signal to the antenna port of the radio frequency circuit based on the baseband transmit signal.

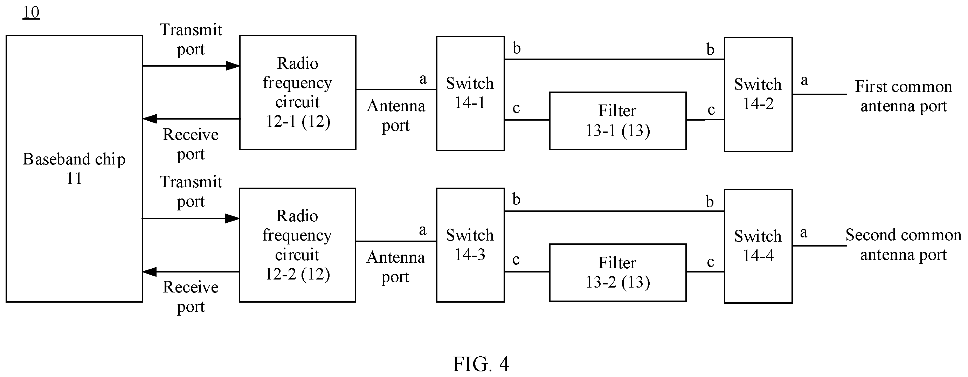

For example, with development of the baseband chip 11 and the wireless local area network, currently, most baseband chips 11 can support receiving baseband receive signals of different frequency bands and outputting baseband transmit signals of different frequency bands. Therefore, when the baseband chip 11 is disposed in the radio frequency system 10, a plurality of radio frequency circuits 12 need to be disposed in the radio frequency system 10 to connect to the baseband chip 11. Refer to FIG. 4. A plurality of radio frequency circuits 12 (a radio frequency circuit 12-1 and a radio frequency circuit 12-2 shown in FIG. 4) are disposed in the radio frequency system 10. One radio frequency circuit 12 is configured to: receive a baseband receive signal of one frequency band and output a baseband transmit signal of the frequency band. In this scenario, to ensure that no interference is generated between signals of different frequency bands, filters 13 (a filter 13-1 and a filter 13-2 shown in FIG. 4) are further disposed in the radio frequency system 10 shown in FIG. 4, and one radio frequency circuit 12 is connected to one filter 13.

Specifically, refer to FIG. 4. The baseband chip 11 supports receiving a baseband receive signal of a first frequency band and outputting a baseband transmit signal of the first frequency band, and/or the baseband chip 11 supports receiving a baseband receive signal of a second frequency band and outputting a baseband transmit signal of the second frequency band. The radio frequency system 10 in FIG. 4 further includes a switch 14-1, a switch 14-2, a switch 14-3, and a switch 14-4. The radio frequency system 10 further includes a first common antenna port and a second common antenna port. A wavelength range of the filter 13-1 is the first frequency band, and a wavelength range of the filter 13-2 is the second frequency band. The baseband chip 11 is connected to a transmit port and a receive port of the radio frequency circuit 12-1. An antenna port of the radio frequency circuit 12-1 is connected to an end a of the switch 14-1. An end b of the switch 14-1 is connected to an end b of the switch 14-2. An end c of the switch 14-1 is connected to an end c of the switch 14-2 through the filter 13-1. An end a of the switch 14-2 is connected to the first common antenna port of the radio frequency system 10. The baseband chip 11 is connected to a transmit port and a receive port of the radio frequency circuit 12-2. An antenna port of the radio frequency circuit 12-2 is connected to an end a of the switch 14-3. An end b of the switch 14-3 is connected to an end b of the switch 14-4. An end c of the switch 14-3 is connected to an end c of the switch 14-4 through the filter 13-2. An end a of the switch 14-4 is connected to the second common antenna port of the radio frequency system 10.

The radio frequency system 10 shown in FIG. 4 includes the following three working modes.

A working mode 1 of the radio frequency system 10 shown in FIG. 4: The baseband chip 11 is configured to: receive a radio frequency receive signal of the first frequency band and output a radio frequency transmit signal of the first frequency band. The switch 14-1 is configured to electrically connect the end a of the switch 14-1 to the end b of the switch 14-1. The switch 14-2 is configured to electrically connect the end b of the switch 14-2 to the end a of the switch 14-2. The switch 14-3 is configured to electrically connect the end a of the switch 14-3 to the end b of the switch 14-3. The switch 14-4 is configured to electrically connect the end b of the switch 14-4 to the end a of the switch 14-4.

When the radio frequency system 10 receives the radio frequency receive signal of the first frequency band, a first-path radio frequency receive signal of the first frequency band is input through the first common antenna port of the radio frequency system 10, and is transmitted to the radio frequency circuit 12-1 through the switch 14-2 and the switch 14-1. The radio frequency circuit 12-1 is configured to output, to the receive port of the radio frequency circuit 12-1 based on the first-path radio frequency receive signal of the first frequency band, a first-path baseband receive signal of the first frequency band. The baseband chip 11 is configured to receive the first-path baseband receive signal of the first frequency band, and parse first-path transmission data based on the first-path baseband receive signal of the first frequency band. A second-path radio frequency receive signal of the first frequency band is input through the second common antenna port of the radio frequency system 10, and is transmitted to the radio frequency circuit 12-2 through the switch 14-4 and the switch 14-3. The radio frequency circuit 12-2 is configured to output, to the receive port of the radio frequency circuit 12-2 based on the second-path radio frequency receive signal of the first frequency band, a second-path baseband receive signal of the first frequency band. The baseband chip 11 is configured to receive the second-path baseband receive signal of the first frequency band, and parse second-path transmission data based on the second-path baseband receive signal of the first frequency band.

When the radio frequency system 10 outputs the radio frequency transmit signal of the first frequency band, the baseband chip 11 may generate a first-path baseband transmit signal of the first frequency band and a second-path baseband transmit signal of the first frequency band. The radio frequency circuit 12-1 receives the first-path baseband transmit signal of the first frequency band through the transmit port, and outputs, to the antenna port of the radio frequency circuit 12-1 based on the first-path baseband transmit signal of the first frequency band, a first-path radio frequency transmit signal of the first frequency band. The first-path radio frequency transmit signal of the first frequency band is output from the first common antenna port of the radio frequency system 10 through the switch 14-1 and the switch 14-2. The radio frequency circuit 12-2 receives the second-path baseband transmit signal of the first frequency band through the transmit port, and outputs, to the antenna port of the radio frequency circuit 12-1 based on the second-path baseband transmit signal of the first frequency band, a second-path radio frequency transmit signal of the first frequency band. The second-path radio frequency transmit signal of the first frequency band is output from the second common antenna port of the radio frequency system 10 through the switch 14-3 and the switch 14-4.

A working mode 2 of the radio frequency system 10 shown in FIG. 4: The baseband chip 11 is configured to: receive a baseband receive signal of the second frequency band and output a baseband transmit signal of the second frequency band. Configurations of the switch 14-1, the switch 14-2, the switch 14-3, and the switch 14-4 are the same as those in the foregoing example 1. Details are not described herein again.

A working mode 3 of the radio frequency system 10 shown in FIG. 4: The baseband chip 11 is configured to: receive a baseband receive signal of the first frequency band, output a baseband transmit signal of the first frequency band, receive a baseband receive signal of the second frequency band, and output a baseband transmit signal of the second frequency band. The switch 14-1 is configured to electrically connect the end a of the switch 14-1 to the end c of the switch 14-1. The switch 14-2 is configured to electrically connect the end c of the switch 14-2 to the end a of the switch 14-2. The switch 14-3 is configured to electrically connect the end a of the switch 14-3 to the end c of the switch 14-3. The switch 14-4 is configured to electrically connect the end c of the switch 14-4 to the end a of the switch 14-4.

When the radio frequency system 10 receives a radio frequency receive signal of the first frequency band, the radio frequency receive signal of the first frequency band is input through the first common antenna port of the radio frequency system 10, and is transmitted to the filter 13-1 through the switch 14-2. The filter 13-1 transmits the filtered radio frequency receive signal of the first frequency band to the radio frequency circuit 12-1 through the switch 14-1. The radio frequency circuit 12-1 is configured to output, to the receive port of the radio frequency circuit 12-1 based on the radio frequency receive signal of the first frequency band, the baseband receive signal of the first frequency band. The baseband chip 11 is configured to: receive the baseband receive signal of the first frequency band, and parse transmission data based on the baseband receive signal of the first frequency band. When the radio frequency system 10 outputs a radio frequency transmit signal of the first frequency band, the baseband chip 11 may generate the baseband transmit signal of the first frequency band. The radio frequency circuit 12-1 receives the baseband transmit signal of the first frequency band through the transmit port, and outputs, to the antenna port of the radio frequency circuit 12-1 based on the baseband transmit signal of the first frequency band, the radio frequency transmit signal of the first frequency band. The radio frequency transmit signal of the first frequency band is transmitted to the filter 13-1 through the switch 14-1. The filter 13-1 outputs the filtered radio frequency transmit signal of the first frequency band from the first common antenna port of the radio frequency system 10 through the switch 14-2.

When the radio frequency system 10 receives a radio frequency receive signal of the second frequency band, the radio frequency receive signal of the second frequency band is input through the second common antenna port of the radio frequency system 10, and is transmitted to the filter 13-2 through the switch 14-4. The filter 13-2 transmits the filtered radio frequency receive signal of the second frequency band to the radio frequency circuit 12-2 through the switch 14-3. The radio frequency circuit 12-2 is configured to output, to the receive port of the radio frequency circuit 12-2 based on the radio frequency receive signal of the second frequency band, the baseband receive signal of the second frequency band. The baseband chip 11 is configured to: receive the baseband receive signal of the second frequency band, and parse transmission data based on the baseband receive signal of the second frequency band. When the radio frequency system 10 outputs a radio frequency transmit signal of the second frequency band, the baseband chip 11 may generate the baseband transmit signal of the second frequency band. The radio frequency circuit 12-2 receives the baseband transmit signal of the second frequency band through the transmit port, and outputs, to the antenna port of the radio frequency circuit 12-2 based on the baseband transmit signal of the second frequency band, the radio frequency transmit signal of the second frequency band. The radio frequency transmit signal of the second frequency band is transmitted to the filter 13-2 through the switch 14-3. The filter 13-2 outputs the filtered radio frequency receive signal of the second frequency band from the second common antenna port of the radio frequency system 10 through the switch 14-4.

When the radio frequency circuit 12 shown in FIG. 3 is disposed in the radio frequency system shown in FIG. 4, transmission of any one of the radio frequency transmit signal of the first frequency band, the radio frequency transmit signal of the second frequency band, the radio frequency receive signal of the first frequency band, and the radio frequency receive signal of the second frequency band needs to pass through three switches, and the three switches are connected in series. An insertion loss of the radio frequency system 10 is a total insertion loss of the three switches, so that the radio frequency system 10 shown in FIG. 4 has a large insertion loss.

In view of this, an embodiment of this application provides a radio frequency circuit. The radio frequency circuit can be well compatible with the baseband chip in the radio frequency system 10 shown in FIG. 4.

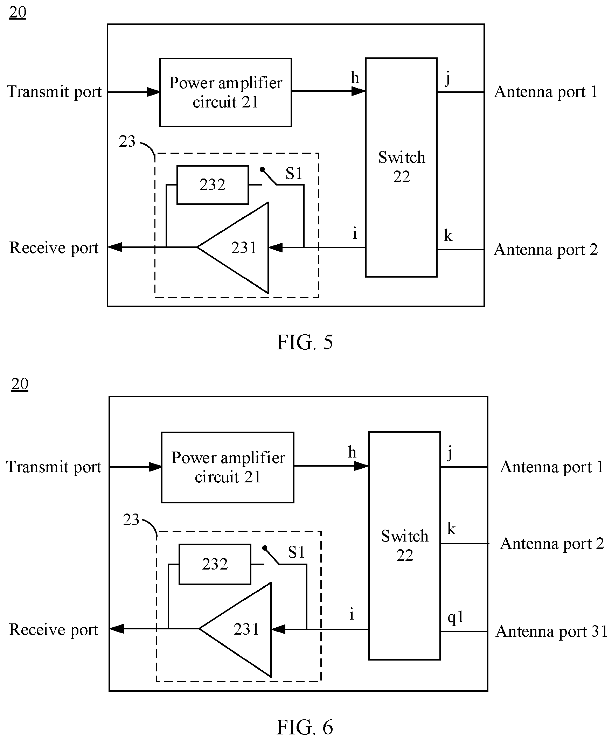

Specifically, refer to FIG. 5 to FIG. 11. An embodiment of this application provides a diagram of a structure of a radio frequency circuit 20. The radio frequency circuit 20 includes a power amplifier circuit 21, a low-noise amplifier circuit 23, and a switch 22 (also referred to as a first switch). The radio frequency circuit 20 includes a transmit port, a receive port, and an antenna port. The switch 22 includes an end h (also referred to as a first end of the switch 22), an end i (also referred to as a second end of the switch 22), an end j (also referred to as a third end of the switch 22), and an end k (also referred to as a fourth end of the switch 22).

The transmit port of the radio frequency circuit 20 is connected to an input end of the power amplifier circuit 21; the receive port of the radio frequency circuit 20 is connected to an output end of the low-noise amplifier circuit 23; an output end of the power amplifier circuit 21 is connected to the end h of the switch 22; an input end of the low-noise amplifier circuit 23 is connected to the end i of the switch 22; and the end j and the end k of the switch 22 are separately connected to the antenna port of the radio frequency circuit 20.

In the radio frequency circuit 20, the switch 22 is disposed, the switch 22 includes the end h and the end k, and the end h and the end k of the switch 22 are separately connected to the antenna port of the radio frequency circuit. Therefore, when disposed in the radio frequency system, the radio frequency circuit 20 can be compatible with a baseband chip that supports receiving baseband receive signals of different frequency bands and outputting baseband transmit signals of different frequency bands in the radio frequency system.

Specifically, refer to FIG. 5. The antenna port includes an antenna port 1 (also referred to as a first antenna port) and an antenna port 2 (also referred to as a second antenna port), the end j of the switch 22 is connected to the antenna port 1 of the radio frequency circuit 20, and the end k of the switch 22 is connected to the antenna port 2 of the radio frequency circuit 20.

The radio frequency circuit 20 shown in FIG. 5 includes the following working states.

Working state 1: The switch 22 is configured to electrically connect the end h to the end j. The power amplifier circuit 21 is configured to: receive a first baseband transmit signal input through the transmit port, and output a first radio frequency transmit signal to the antenna port 1 based on the first baseband transmit signal.

Working state 2: The switch 22 is configured to electrically connect the end h to the end k. The power amplifier circuit 21 is configured to: receive a second baseband transmit signal input through the transmit port, and output a second radio frequency transmit signal to the antenna port 2 based on the second baseband transmit signal.

Working state 3: The switch 22 is configured to electrically connect the end i to the end j. The low-noise amplifier circuit 23 is configured to: receive a first radio frequency receive signal input through the antenna port 1, and output a first baseband receive signal to the receive port based on the first radio frequency receive signal.

Working state 4: The switch 22 is configured to electrically connect the end i to the end k. The low-noise amplifier circuit 23 is configured to: receive a second radio frequency receive signal input through the antenna port 2, and output a second baseband receive signal to the receive port based on the second radio frequency receive signal.

In a time period, the radio frequency circuit 20 performs one of the working state 1, the working state 2, the working state 3, or the working state 4.

For example, refer to FIG. 5. The low-noise amplifier circuit 23 includes a low-noise amplifier 231, an attenuator 232, and a switch S1 (also referred to as a third switch). The attenuator 232 and the switch S1 are connected in series between the input end of the low-noise amplifier circuit 23 and the output end of the low-noise amplifier circuit 23. The low-noise amplifier 231 is connected between the input end of the low-noise amplifier circuit 23 and the output end of the low-noise amplifier circuit 23.

In this case, the working state 3 of the radio frequency circuit 20 shown in FIG. 5 includes:

Working state 31: The switch 22 is configured to electrically connect the end i to the end j. The switch S1 is configured to be not turned on. The low-noise amplifier circuit 23 is configured to receive the first radio frequency receive signal input through the antenna port 1. The low-noise amplifier 231 amplifies the first radio frequency receive signal to generate the first baseband receive signal.

Working state 32: The switch 22 is configured to electrically connect the end i to the end j. The switch S1 is configured to be turned on. The low-noise amplifier circuit 23 is configured to receive the first radio frequency receive signal input through the antenna port 1. The attenuator 232 attenuates the first radio frequency receive signal to generate the first baseband receive signal.

In this case, the working state 4 of the radio frequency circuit 20 shown in FIG. 5 includes:

Working state 41: The switch 22 is configured to electrically connect the end i to the end k. The switch S1 is configured to be not turned on. The low-noise amplifier circuit 23 is configured to receive the second radio frequency receive signal input through the antenna port 2. The low-noise amplifier 231 amplifies the second radio frequency receive signal to generate the second baseband receive signal.

Working state 42: The switch 22 is configured to electrically connect the end i to the end k. The switch S1 is configured to be turned on. The low-noise amplifier circuit 23 is configured to receive the second radio frequency receive signal input through the antenna port 2. The attenuator 232 attenuates the second radio frequency receive signal to generate the second baseband receive signal.

For example, when the switch S1 shown in FIG. 5 is configured to be turned on, a baseband chip 31 does not provide a supply voltage to the low-noise amplifier 231. The low-noise amplifier 231 is equivalent to a large attenuator, and an attenuation amount of the low-noise amplifier 231 is far greater than an attenuation amount of the attenuator 232. Therefore, it may also be considered that a signal between the input end and the output end of the low-noise amplifier circuit 23 is transmitted through the attenuator 232.

In some other embodiments, the switch S1 may alternatively be a single-pole double-throw switch, and the switch S1 is configured to selectively connect the input end to the output end of the low-noise amplifier circuit 23 through the attenuator 232 or the low-noise amplifier 231.

For example, refer to FIG. 6. Based on the radio frequency circuit 20 shown in FIG. 5, the antenna port of the radio frequency circuit 20 shown in FIG. 6 further includes an antenna port 31 (also referred to as a third antenna port). The switch 22 further includes an end q1 (also referred to as a fifth end of the switch 22). The end q1 of the switch 22 is connected to the corresponding antenna port 31 of the radio frequency circuit 20.

Therefore, the working state of the radio frequency circuit 20 shown in FIG. 6 not only includes the working state of the radio frequency circuit 20 shown in FIG. 5, but also includes the following working states:

Working state 5: The switch 22 is configured to electrically connect the end h to the end q1. The power amplifier circuit 21 is configured to: receive a third baseband transmit signal input through the transmit port, and perform amplification based on the third baseband transmit signal to output a third radio frequency transmit signal to the antenna port 31.

Working state 6: The switch 22 is configured to electrically connect the end i to the end q1. The low-noise amplifier circuit 23 is configured to: receive a third radio frequency receive signal input through the antenna port 31, and output the third baseband receive signal to the receive port based on the third radio frequency receive signal.

A structure of the low-noise amplifier circuit 23 shown in FIG. 6 is the same as that of the low-noise amplifier circuit 23 shown in FIG. 5. Therefore, the working state 6 includes:

Working state 61: The switch 22 is configured to electrically connect the end i to the end q1. The switch S1 is configured to be not turned on. The low-noise amplifier circuit 23 is configured to receive the third radio frequency receive signal input through the antenna port 31. The low-noise amplifier 231 amplifies the third radio frequency receive signal to generate the third baseband receive signal.

Working state 62: The switch 22 is configured to electrically connect the end i to the end q1. The switch S1 is configured to be turned on. The low-noise amplifier circuit 23 is configured to receive the third radio frequency receive signal input through the antenna port 31. The attenuator 232 attenuates the third radio frequency receive signal to generate the third baseband receive signal.

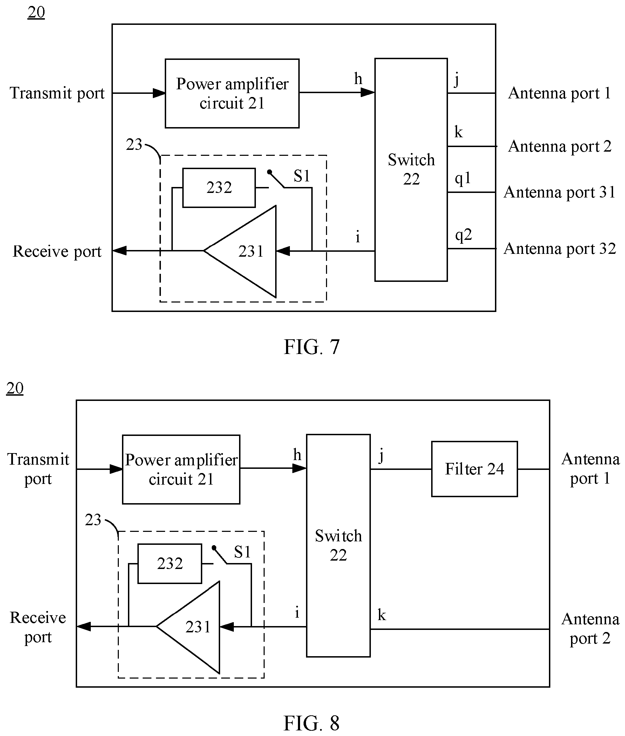

For example, refer to FIG. 7. Based on the radio frequency circuit 20 shown in FIG. 6, the antenna port of the radio frequency circuit 20 shown in FIG. 7 further includes an antenna port 32 (also referred to as a third antenna end). The switch 22 further includes an end q2 (also referred to as a fifth end of the switch 22). The end q2 of the switch 22 is connected to the corresponding antenna port 32 of the radio frequency circuit 20.

Therefore, the working state of the radio frequency circuit 20 shown in FIG. 7 not only includes the working state of the radio frequency circuit 20 shown in FIG. 6, but also includes the following working states:

Working state 7: The switch 22 is configured to electrically connect the end h to the end q2. The power amplifier circuit 21 is configured to: receive a third baseband transmit signal input through the transmit port, and perform amplification based on the third baseband transmit signal to output a third radio frequency transmit signal to the antenna port 32.

Working state 8: The switch 22 is configured to electrically connect the end i to an end q3. The low-noise amplifier circuit 23 is configured to: receive a third radio frequency receive signal input through the antenna port 32, and output a third baseband receive signal to the receive port based on the third radio frequency receive signal.

A structure of the low-noise amplifier circuit 23 shown in FIG. 7 is the same as that of the low-noise amplifier circuit 23 shown in FIG. 6. Therefore, the working state 8 includes:

Working state 81: The switch 22 is configured to electrically connect the end i to the end q2. The switch S1 is configured to be not turned on. The low-noise amplifier circuit 23 is configured to receive the third radio frequency receive signal input through the antenna port 32. The low-noise amplifier 231 amplifies the third radio frequency receive signal to generate the third baseband receive signal.

Working state 82: The switch 22 is configured to electrically connect the end i to the end q2. The switch S1 is configured to be turned on. The low-noise amplifier circuit 23 is configured to receive the third radio frequency receive signal input through the antenna port 32. The attenuator 232 attenuates the third radio frequency receive signal to generate the third baseband receive signal.

For example, in the radio frequency circuit 20 shown in FIG. 7, the antenna port of the radio frequency circuit 20 may further include a plurality of third antenna ends. The switch 22 may further include a plurality of fifth ends. This is not limited in embodiments of this application.

To be specific, the antenna port of the radio frequency circuit 20 further includes at least one third antenna port, the switch 22 further includes at least one fifth end, and one fifth end of the switch 22 is connected to a corresponding third antenna port of the radio frequency circuit 20. For example, the end q1 of the switch 22 is connected to the corresponding antenna port 31 of the radio frequency circuit 20, and the end q2 of the switch 22 is connected to the corresponding antenna port 32 of the radio frequency circuit 20.

The switch 22 is configured to electrically connect the end h to the one fifth end. The power amplifier circuit 21 is configured to: receive a third baseband transmit signal input through the transmit port, and perform amplification based on the third baseband transmit signal to output a third radio frequency transmit signal to the corresponding third antenna port. For example, the end h is connected to the end q1, and the corresponding third antenna port is specifically the antenna port 31 connected to the end q1. The end h is connected to the end q2, and the corresponding third antenna port is specifically the antenna port 32 connected to the end q2.

Alternatively, the switch 22 is configured to electrically connect the end i to the one fifth end. The low-noise amplifier circuit is configured to: receive a third radio frequency receive signal input through the corresponding third antenna port, and output a third baseband receive signal to the receive port based on the third radio frequency receive signal. For example, the end i is connected to the end q1, and the corresponding third antenna port is specifically the antenna port 31 connected to the end q1. The end i is connected to the end q2, and the corresponding third antenna port is specifically the antenna port 32 connected to the end q2.

In another embodiment, refer to FIG. 8. Compared with the radio frequency circuit 20 shown in FIG. 5, the radio frequency circuit 20 shown in FIG. 8 further includes a filter 24 (also referred to as a first filter), and an end j of the switch 22 is connected to the antenna port 1 of the radio frequency circuit 20 through the filter 24.

For a working state of the radio frequency circuit 20 shown in FIG. 7, refer to the working state of the radio frequency circuit 20 shown in FIG. 5. A difference lies in that, in the working state 1, the power amplifier circuit 21 is configured to: receive the first baseband transmit signal input through the transmit port, and output the first radio frequency transmit signal to the filter 24 based on the first baseband transmit signal. The filter 24 outputs the filtered first radio frequency transmit signal to the antenna port 1. The filter 24 may specifically filter out a sideband interference signal, and the like of the first radio frequency transmit signal. In the working state 3, the filter 24 is configured to: receive the first radio frequency receive signal input through the antenna port 1, and output the filtered first radio frequency receive signal to the low-noise amplifier circuit 23. The filter 24 may specifically filter out another signal whose frequency band is different from that of the first radio frequency receive signal. The low-noise amplifier circuit 23 is configured to output the first baseband receive signal to the receive port based on the first radio frequency receive signal.

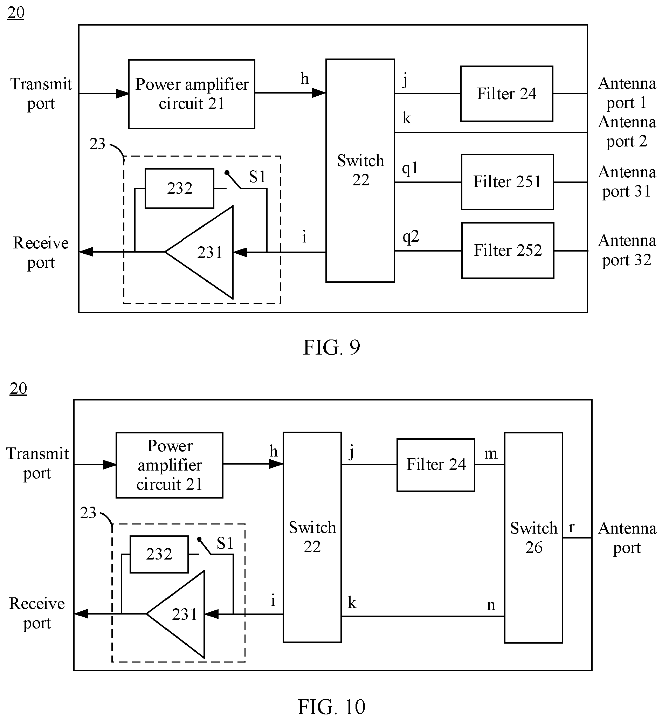

In addition, based on the radio frequency circuit 20 shown in FIG. 8, refer to FIG. 9. The radio frequency circuit 20 further includes at least one second filter (a filter 251 and a filter 252 shown in FIG. 9); the antenna port further includes at least one third antenna port (the antenna port 31 and the antenna port 32 shown in FIG. 8); and the switch 22 further includes at least one fifth end (the end q1 and the end q2 shown in FIG. 8). One fifth end of the switch 22 is connected to a corresponding third antenna port of the radio frequency circuit 20 through one second filter. For example, the end q1 of the switch 22 is connected to the antenna port 31 of the radio frequency circuit 20 through the filter 251, and the end q2 of the switch 22 is connected to the antenna port 32 of the radio frequency circuit 20 through the filter 252.

A frequency range of the filter 24, a frequency range of the filter 251, and a frequency range of the filter 252 that are shown in FIG. 9 are not limited in embodiments of this application. In some cases, the frequency range of the filter 24, the frequency range of the filter 251, and the frequency range of the filter 252 may be respectively frequency ranges of 5G high frequency bands that respectively comply with division of Wi-Fi frequency bands in different countries.

For example, the frequency range of the filter 24 is the first frequency band, indicating that the filter 24 filters out all signals outside the first frequency band, and outputs a signal of the first frequency band.

The switch 22 is configured to electrically connect the end h to the one fifth end. The power amplifier circuit 21 is configured to: receive a third baseband transmit signal input through the transmit port, and perform amplification based on the third baseband transmit signal to output a third radio frequency transmit signal to the corresponding second filter. The corresponding second filter is configured to output the filtered third radio frequency transmit signal to the corresponding third antenna port. For example, the end h is connected to the end q1, the corresponding second filter is specifically the filter 251 connected to the end q1, and the corresponding third antenna port is specifically the antenna port 31 connected to the end q1. The end h is connected to the end q2, the corresponding second filter is specifically the filter 252 connected to the end q2, and the corresponding third antenna port is specifically the antenna port 32 connected to the end q2.

Alternatively, the switch 22 is configured to electrically connect the end i to the one fifth end. The corresponding filter is configured to: receive a third radio frequency receive signal input through the corresponding third antenna port, and output the filtered third radio frequency receive signal to the low-noise amplifier circuit. The low-noise amplifier circuit is configured to output a third baseband receive signal to the receive port based on the third radio frequency receive signal. For example, the end i is connected to the end q1, the corresponding second filter is specifically the filter 251 connected to the end q1, and the corresponding third antenna port is specifically the antenna port 31 connected to the end q1. The end i is connected to the end q2, the corresponding second filter is specifically the filter 252 connected to the end q2, and the corresponding third antenna port is specifically the antenna port 32 connected to the end q2.

Specifically, for the working state of the radio frequency circuit 20 shown in FIG. 9, refer to the working state of the radio frequency circuit 20 shown in FIG. 7. The differences are as follows:

In the working state 1, the power amplifier circuit 21 is configured to: receive the first baseband transmit signal input through the transmit port, and output the first radio frequency transmit signal to the filter 24 based on the first baseband transmit signal. The filter 24 outputs the filtered first radio frequency transmit signal to the antenna port 1.

In the working state 3, the filter 24 is configured to: receive the first radio frequency receive signal input through the antenna port 1, and output the filtered first radio frequency receive signal to the low-noise amplifier circuit 23. The low-noise amplifier circuit 23 is configured to output the first baseband receive signal to the receive port based on the first radio frequency receive signal.

In the working state 5, the power amplifier circuit 21 is configured to: receive the third baseband transmit signal input through the transmit port, and output the third radio frequency transmit signal to the filter 251 based on the third baseband transmit signal, where the filter 251 outputs the filtered third radio frequency transmit signal to the antenna port 31.

In the working state 6, the filter 251 is configured to: receive the third radio frequency receive signal input through the antenna port 31, and output the filtered third radio frequency receive signal to the low-noise amplifier circuit 23. The low-noise amplifier circuit 23 is configured to output the third baseband receive signal to the receive port based on the third radio frequency receive signal.

In the working state 7, the power amplifier circuit 21 is configured to: receive the third baseband transmit signal input through the transmit port, and output the third radio frequency transmit signal to the filter 252 based on the first baseband transmit signal, where the filter 252 outputs the filtered third radio frequency transmit signal to the antenna port 32.

In the working state 8, the filter 252 is configured to: receive the third radio frequency receive signal input through the antenna port 32, and output the filtered third radio frequency receive signal to the low-noise amplifier circuit 23. The low-noise amplifier circuit 23 is configured to output the third baseband receive signal to the receive port based on the third radio frequency receive signal.

In some other embodiments, refer to FIG. 10. The radio frequency circuit 20 includes the power amplifier circuit 21, the low-noise amplifier circuit 23, and the switch 22. The radio frequency circuit 20 includes the transmit port, the receive port, and the antenna port. The switch 22 includes the end h, the end i, the end j, and the end k. The radio frequency circuit 20 further includes the filter 24 (also referred to as the first filter) and a switch 26 (also referred to as a second switch). The switch 26 includes an end m (also referred to as a sixth end of the second switch), an end n (also referred to as a seventh end of the second switch), and an end r (also referred to as an eighth end of the second switch).

The transmit port of the radio frequency circuit 20 is connected to the input end of the power amplifier circuit 21, the receive port of the radio frequency circuit 20 is connected to the output end of the low-noise amplifier circuit 23, the output end of the power amplifier circuit 21 is connected to the end h of the switch 22, and the input end of the low-noise amplifier circuit 23 is connected to the end i of the switch 22. The end j and the end k of the switch 22 are separately connected to the antenna port of the radio frequency circuit 20. Specifically, the end j of the switch 22 is connected to the end m of the switch 26 through the filter 24, the end k of the switch 22 is connected to the end m of the switch 26, and the end r of the switch 26 is connected to the antenna port of the radio frequency circuit 20.

The radio frequency circuit shown in FIG. 10 includes the filter 24 and the switch 26, and includes one antenna port, so that the radio frequency circuit 20 has a higher integration level. In addition, when the radio frequency circuit 20 outputs a radio frequency transmit signal or receives a radio frequency receive signal, only two switches: the switch 22 and the switch 26, are included in a signal transmission path, so that an insertion loss of the radio frequency circuit 20 can be reduced.

For example, the radio frequency circuit 20 shown in FIG. 10 includes the following working states.

Working state 1: The switch 22 is configured to electrically connect the end h to the end j. The switch 26 is configured to electrically connect the end r to the end m. The power amplifier circuit 21 is configured to: receive a first baseband transmit signal input through the transmit port, and output a first radio frequency transmit signal to the filter 24 based on the first baseband transmit signal. The filter 24 is configured to output the filtered first radio frequency transmit signal to the antenna port.

Working state 2: The switch 22 is configured to electrically connect the end h to the end k. The switch 26 is configured to electrically connect the end r to the end n. The power amplifier circuit 21 is configured to: receive a second baseband transmit signal input through the transmit port, and output a second radio frequency transmit signal to the antenna port based on the second baseband transmit signal.

Working state 3: The switch 22 is configured to electrically connect the end i to the end j. The switch 26 is configured to electrically connect the end r to the end m. The filter 24 is configured to: receive a first radio frequency receive signal input through the antenna port, and output the filtered first radio frequency receive signal to the low-noise amplifier circuit 23. The low-noise amplifier circuit 23 is configured to output a first baseband receive signal to the receive port based on the first radio frequency receive signal.

Working state 4: The switch 22 is configured to electrically connect the end i to the end k. The switch 26 is configured to electrically connect the end r to the end n. The low-noise amplifier circuit 23 is configured to: receive a second radio frequency receive signal input through the antenna port, and output a second baseband receive signal to the receive port based on the second radio frequency receive signal.

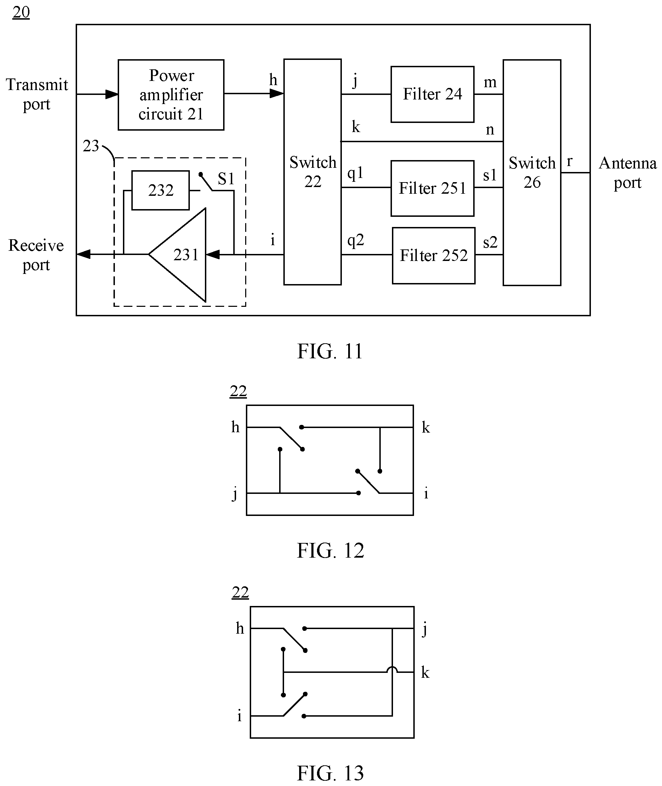

In some embodiments, compared with the radio frequency circuit 20 shown in FIG. 10, the radio frequency circuit 20 shown in FIG. 11 further includes at least one second filter (a filter 251 and a filter 252 shown in FIG. 11). The switch 22 further includes at least one fifth end (an end q1 and an end q2 shown in FIG. 11). The switch 26 further includes at least one ninth end (an end s1 and an end s2 shown in FIG. 11). One fifth end of the switch 22 is connected to a corresponding ninth end of the switch 26 through one second filter. For example, the end q1 of the switch 22 is connected to the end s1 of the switch 26 through the filter 251, and the end q2 of the switch 22 is connected to the end s2 of the switch 26 through the filter 252.

The switch 22 is configured to electrically connect the end h to the one fifth end. The switch 26 is configured to electrically connect the end r to the corresponding ninth end. The power amplifier circuit 21 is configured to: receive a third baseband transmit signal input through the transmit port, and output a third radio frequency transmit signal to the corresponding second filter based on the third baseband transmit signal. The corresponding second filter is configured to output the filtered third radio frequency transmit signal to the antenna port. For example, the end h is connected to the end q1, the corresponding second filter is specifically the filter 251 connected to the end q1, and the corresponding ninth end is specifically the end s1 connected to the end q1. The end h is connected to the end q2, the corresponding second filter is specifically the filter 252 connected to the end q2, and the corresponding ninth end is specifically the end s2 connected to the end q2.

Alternatively, the switch 22 is configured to electrically connect the end i to the one fifth end. The switch 26 is configured to electrically connect the end r to the corresponding ninth end. The corresponding second filter is configured to: receive a third radio frequency receive signal input through the antenna port, and output the filtered third radio frequency receive signal to the low-noise amplifier circuit 23. The low-noise amplifier circuit 23 is configured to output a third baseband receive signal to the receive port based on the third radio frequency receive signal. For example, the end i is connected to the end q1, the corresponding second filter is specifically the filter 251 connected to the end q1, and the corresponding ninth end is specifically the end s1 connected to the end q1. The end i is connected to the end q2, the corresponding second filter is specifically the filter 252 connected to the end q2, and the corresponding ninth end is specifically the end s2 connected to the end q2.

Specifically, the working state of the radio frequency circuit 20 shown in FIG. 11 not only includes the working state of the radio frequency circuit 20 shown in FIG. 10, but also includes the following working states:

Working state 5: The switch 22 is configured to electrically connect the end h to the end q1. The switch 26 is configured to electrically connect the end r to the end s1. The power amplifier circuit 21 is configured to: receive a third baseband transmit signal input through the transmit port, and output a third radio frequency transmit signal to the filter 251 based on the third baseband transmit signal. The filter 251 is configured to output the filtered third radio frequency transmit signal to the antenna port.

Working state 6: The switch 22 is configured to electrically connect the end i to the end q1. The switch 26 is configured to electrically connect the end r to the end s1. The filter 251 is configured to: receive a third radio frequency receive signal input through the antenna port, and output the filtered third radio frequency receive signal to the low-noise amplifier circuit 23. The low-noise amplifier circuit 23 is configured to output a third baseband receive signal to the receive port based on the third radio frequency receive signal.

Working state 7: The switch 22 is configured to electrically connect the end h to the end q2. The switch 26 is configured to electrically connect the end r to the end s2. The power amplifier circuit 21 is configured to: receive a third baseband transmit signal input through the transmit port, and output a third radio frequency transmit signal to the filter 252 based on the third baseband transmit signal. The filter 252 is configured to output the filtered third radio frequency transmit signal to the antenna port.

Working state 8: The switch 22 is configured to electrically connect the end i to the end q2. The switch 26 is configured to electrically connect the end r to the end s2. The filter 252 is configured to: receive a third radio frequency receive signal input through the antenna port, and output the filtered third radio frequency receive signal to the low-noise amplifier circuit 23. The low-noise amplifier circuit 23 is configured to output a third baseband receive signal to the receive port based on the third radio frequency receive signal.

The switch 22 in the radio frequency circuit 20 shown in FIG. 5, FIG. 8, and FIG. 10 is specifically a double-pole double-throw switch (double-pole double-throw, DPDT). For a diagram of a principle structure of the double-pole double-throw switch, refer to FIG. 12. The end h of the switch 22 corresponds to one metal contact, the end i of the switch 22 corresponds to one metal contact, the end j of the switch 22 corresponds to two metal contacts, and the end k of the switch 22 corresponds to two metal contacts. The metal contact at the end h may be flipped to be connected to the metal contact at the end j or the metal contact at the end k, and the metal contact at the end i may be flipped to be connected to the metal contact at the end j or the metal contact at the end k.

For example, to ensure that the end h and the end i are located on a same side and that the end j and the end k are located on a same side, refer to FIG. 13. The switch 22 shown in FIG. 12 is usually connected to form a structure shown in FIG. 13. The principle is the same.

The switch 22 in the radio frequency circuit 20 shown in FIG. 6 is specifically a double-pole three-throw switch. The switch 22 in the radio frequency circuit 20 shown in FIG. 7, FIG. 9, and FIG. 11 is specifically a double-pole four-throw switch. The switch 26 shown in FIG. 10 is specifically a single-pole double-throw switch (single-pole double-throw, SPDT). The switch 26 shown in FIG. 11 is specifically a single-pole four-throw switch.

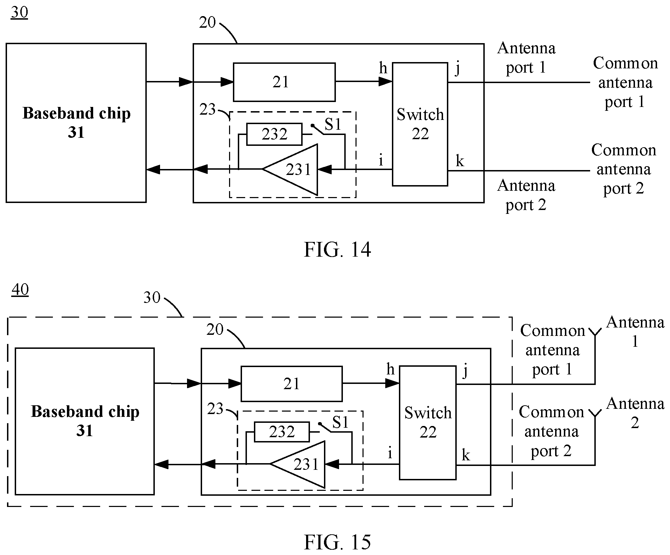

For example, an embodiment of this application further provides a radio frequency system. Refer to the radio frequency system 30 shown in any one of FIG. 14, and FIG. 16 to FIG. 23. The radio frequency system 30 includes the baseband chip 31 and at least one radio frequency circuit 20 shown in any one of FIG. 5 to FIG. 11. The radio frequency system 30 further includes a common antenna port. The baseband chip 31 is connected to the transmit port and the receive port of the radio frequency circuit 20. The common antenna port of the radio frequency system 30 is connected to the antenna port of the radio frequency circuit 20.

Specifically, refer to FIG. 14. The common antenna port of the radio frequency system 30 includes a common antenna port 1 (also referred to as a first common antenna port) and a common antenna port 2 (also referred to as a second common antenna port). The radio frequency circuit 20 may be specifically the radio frequency circuit 20 shown in FIG. 5. The radio frequency circuit 20 includes the antenna port 1 and the antenna port 2. The antenna port 1 is connected to the common antenna port 1, and the antenna port 2 is connected to the common antenna port 2.

For example, in the radio frequency system 30, a control circuit is disposed in the baseband chip 31, and the control circuit is connected to the switch S1 and the switch 22 in the radio frequency circuit 20. When the radio frequency system 30 needs to output a radio frequency transmit signal through the common antenna port 1 of the radio frequency system 30, the control circuit in the baseband chip 31 outputs a first control signal to the switch 22, to control the switch 22 to connect the end h to the end j of the switch 22 based on the first control signal, and control the radio frequency circuit 20 to operate in the working state 1. When the radio frequency system 30 needs to output a radio frequency transmit signal through the common antenna port 2 of the radio frequency system 30, the control circuit in the baseband chip 31 outputs a second control signal to the switch 22, to control the switch 22 to connect the end h to the end k of the switch 22 based on the second control signal, and control the radio frequency circuit 20 to operate in the working state 2. When the radio frequency system 30 needs to receive a radio frequency receive signal input through the common antenna port 1, the control circuit in the baseband chip 31 outputs a third control signal to the switch 22, to control the switch 22 to connect the end i to the end j of the switch 22 based on the third control signal, and control the radio frequency circuit 20 to operate in the working state 3. When the radio frequency system 30 needs to receive a radio frequency receive signal input through the common antenna port 2, the control circuit in the baseband chip 31 outputs a fourth control signal to the switch 22, to control the switch 22 to connect the end i to the end k of the switch 22 based on the fourth control signal, and control the radio frequency circuit 20 to operate in the working state 4.

For example, in a predetermined time period, the switch S1 in the radio frequency circuit 20 is not turned on, and the control circuit in the baseband chip 31 outputs a third control signal or a fourth control signal to the switch 22, to control the radio frequency circuit 20 to operate in the working state 3 or the working state 4. In this case, the baseband chip 31 may receive a baseband receive signal. After the baseband chip 31 determines that power of the baseband receive signal is greater than a predetermined value, the control circuit in the baseband chip 31 outputs a receive control signal to the switch S1, to control the switch S1 to be turned on, so as to reduce power of the baseband receive signal received by the baseband chip 31.

In some embodiments, the radio frequency circuit 20 shown in FIG. 14 may alternatively be the radio frequency circuit 20 shown in FIG. 6 or FIG. 7. For example, when the radio frequency circuit 20 is the radio frequency circuit 20 shown in FIG. 6, because the radio frequency circuit 20 includes three antenna ports, the radio frequency system 30 also needs to include three common antenna ports. One antenna port is connected to a corresponding common antenna port, and the control circuit in the baseband chip 31 can be used to receive a radio frequency receive signal or output a radio frequency transmit signal through any one of the three common antenna ports. For example, when the radio frequency circuit 20 is the radio frequency circuit 20 shown in FIG. 7, because the radio frequency circuit 20 includes four antenna ports, the radio frequency system 30 also needs to include four common antenna ports. One antenna port is connected to a corresponding common antenna port, and the control circuit in the baseband chip 31 can be used to receive a radio frequency receive signal or output a radio frequency transmit signal through any one of the four common antenna ports.

For example, the radio frequency system 30 shown in FIG. 14 may further include M radio frequency circuits 20, where one radio frequency circuit 20 includes N antenna ports, M is a positive integer greater than or equal to 1, N is a positive integer greater than or equal to 1, and the M radio frequency circuits 20 include M×N antenna ports. In this case, the radio frequency system 30 needs to include M×N common antenna ports. One antenna port is connected to a corresponding common antenna port, and the control circuit in the baseband chip 31 can be used to receive a radio frequency receive signal or output a radio frequency transmit signal through any one of the M×N common antenna ports.

For example, refer to FIG. 15. An embodiment of this application provides a diagram of a structure of a communication device 40. The communication device 40 includes antennas (the antenna 1 and the antenna 2 shown in FIG. 15) and the radio frequency system 30 shown in FIG. 14. The antenna is connected to a common antenna port of the radio frequency system 30. Specifically, the radio frequency system 30 shown in FIG. 14 includes two common antenna ports, and two antennas are disposed in the communication device 40. The antenna 1 is connected to the common antenna port 1, and the antenna 2 is connected to the common antenna port 2.

When the antenna 1 covers a first region, the antenna 2 covers a second region, and the first region partially overlaps or does not overlap with the second region, the communication device 40 works as follows:
In a first time period, the baseband chip 31 generates a baseband transmit signal, and the baseband chip 31 controls the radio frequency circuit 20 to operate in the working state 1. In this case, the radio frequency circuit 20 outputs a radio frequency transmit signal to the antenna port 1, and the radio frequency transmit signal is transmitted to the antenna 1, and then radiated by the antenna 1 to the first region.

In a second time period, the baseband chip 31 generates a baseband transmit signal, and the baseband chip 31 controls the radio frequency circuit 20 to operate in the working state 2. In this case, the radio frequency circuit 20 outputs a radio frequency transmit signal to the antenna port 2, and the radio frequency transmit signal is transmitted to the antenna 2, and then radiated by the antenna 2 to the second region.

In a third time period, the baseband chip 31 controls the radio frequency circuit 20 to operate in the working state 3. In this case, the radio frequency circuit 20 receives a radio frequency receive signal in the first region, and outputs a baseband receive signal to the receive port. The baseband chip 31 parses transmission data in the first region based on the baseband receive signal.

In a fourth time period, the baseband chip 31 controls the radio frequency circuit 20 to operate in the working state 4. In this case, the radio frequency circuit 20 receives a radio frequency receive signal in the second region, and outputs a baseband receive signal to the receive port. The baseband chip 31 parses transmission data in the second region based on the baseband receive signal.

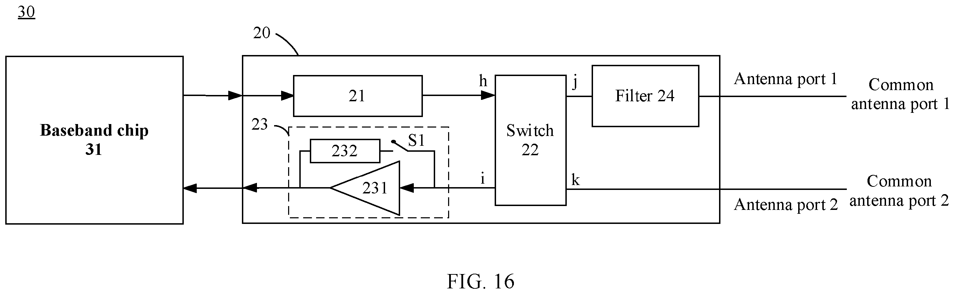

In some other embodiments, refer to FIG. 16. An embodiment of this application further provides a diagram of a structure of the radio frequency system 30. Common antenna ports in the radio frequency system 30 shown in FIG. 16 include a common antenna port 1 and a common antenna port 2. The radio frequency circuit 20 in the radio frequency system 30 shown in FIG. 16 is specifically the radio frequency circuit 20 shown in FIG. 8. The radio frequency circuit 20 includes the antenna port 1 and the antenna port 2. The antenna port 1 is connected to the common antenna port 1, and the antenna port 2 is connected to the common antenna port 2. In addition, the control circuit in the baseband chip 31 can be used to receive a radio frequency receive signal or output a radio frequency transmit signal through any one of the two common antenna ports.

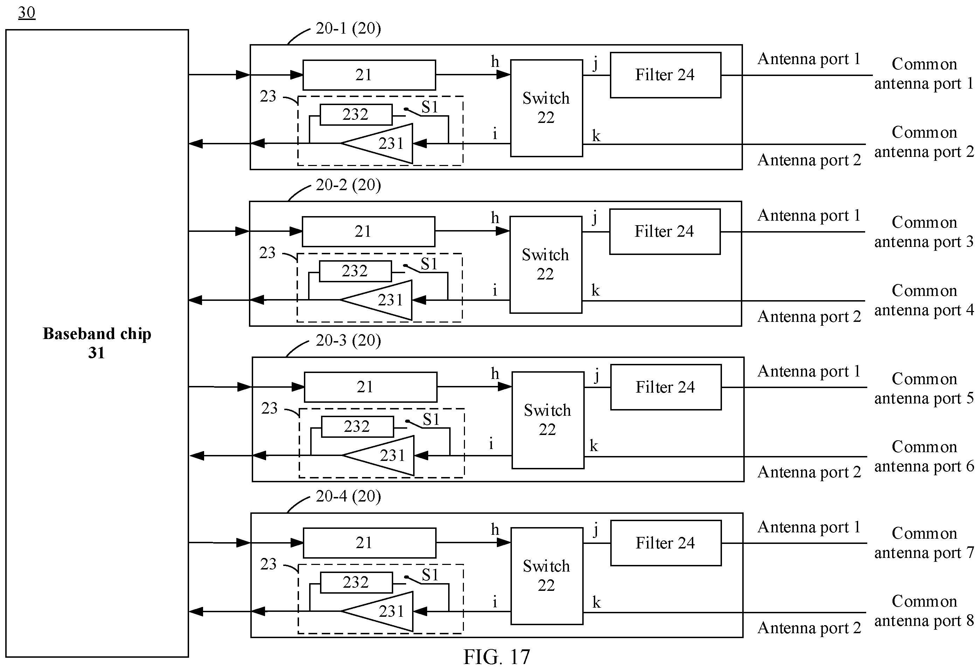

For example, when the baseband chip 31 can support multiple-input multiple-output (multiple input multiple output, MIMO), as shown in FIG. 17, the radio frequency system 30 shown in FIG. 17 supports four-input four-output. The radio frequency system 30 includes four radio frequency circuits 20: a radio frequency circuit 20-1, a radio frequency circuit 20-2, a radio frequency circuit 20-3, and a radio frequency circuit 20-4. The four radio frequency circuits 20 each are the radio frequency circuit 20 shown in FIG. 8, and the radio frequency system 30 includes eight common antenna ports. An antenna port 1 of the radio frequency circuit 20-1 is connected to the common antenna port 1, and an antenna port 2 is connected to the common antenna port 2. An antenna port 1 of the radio frequency circuit 20-2 is connected to the common antenna port 3, and an antenna port 2 is connected to the common antenna port 4. An antenna port 1 of the radio frequency circuit 20-3 is connected to the common antenna port 5, and an antenna port 2 is connected to the common antenna port 6. An antenna port 1 of the radio frequency circuit 20-4 is connected to the common antenna port 7, and an antenna port 2 is connected to the common antenna port 8.

Frequency ranges of a filter 24 in the radio frequency circuit 20-1 and a filter 24 in the radio frequency circuit 20-2 are a first frequency band, and frequency ranges of a filter 24 in the radio frequency circuit 20-3 and a filter 24 in the radio frequency circuit 20-4 are a second frequency band. The radio frequency system 30 may receive a radio frequency receive signal of the first frequency band and output a radio frequency transmit signal of the first frequency band, and/or receive a radio frequency receive signal of the second frequency band and output a radio frequency transmit signal of the second frequency band.

The radio frequency system 30 includes the following working modes.

Working mode 1: The radio frequency system 30 receives the radio frequency receive signal of the first frequency band and outputs the radio frequency transmit signal of the first frequency band.

When the radio frequency system 30 outputs a radio frequency transmit signal, the baseband chip 31 controls the radio frequency circuit 20-1 to operate in a working state 2, the radio frequency circuit 20-2 to operate in the working state 2, the radio frequency circuit 20-3 to operate in the working state 2, and the radio frequency circuit 20-4 to operate in the working state 2. The baseband chip 31 generates four baseband transmit signals of the first frequency band, and the radio frequency circuit 20-1, the radio frequency circuit 20-2, the radio frequency circuit 20-3, and the radio frequency circuit 20-4 each receive one baseband transmit signal of the first frequency band, and output one radio frequency transmit signal of the first frequency band. The radio frequency system 30 may finally output four radio frequency transmit signals of the first frequency band from the common antenna port 2, the common antenna port 4, the common antenna port 6, and the common antenna port 8.

When the radio frequency system 30 receives a radio frequency receive signal, the baseband chip 31 controls the radio frequency circuit 20-1 to operate in a working state 4, the radio frequency circuit 20-2 to operate in the working state 4, the radio frequency circuit 20-3 to operate in the working state 4, and the radio frequency circuit 20-4 to operate in the working state 4. The radio frequency system 30 may receive four radio frequency receive signals of the first frequency band from the common antenna port 2, the common antenna port 4, the common antenna port 6, and the common antenna port 8. The radio frequency circuit 20-1, the radio frequency circuit 20-2, the radio frequency circuit 20-3, and the radio frequency circuit 20-4 each receive one radio frequency receive signal of the first frequency band, and output one baseband receive signal of the first frequency band to the baseband chip 31. The baseband chip 31 may finally receive four baseband receive signals of the first frequency band.

Working mode 2: The radio frequency system 30 receives the radio frequency receive signal of the second frequency band and outputs the radio frequency transmit signal of the second frequency band. This working mode is similar to the foregoing working mode 1. A difference lies in that the baseband chip 31 outputs four baseband transmit signals of the second frequency band, and receives four baseband receive signals of the second frequency band. Details are not described herein again.

Working mode 3: The radio frequency system 30 receives the radio frequency receive signal of the first frequency band, and outputs the radio frequency transmit signal of the first frequency band; and receives the radio frequency receive signal of the second frequency band, and outputs the radio frequency transmit signal of the second frequency band.

In this working mode, the radio frequency system 30 receives the radio frequency receive signal of the first frequency band and outputs the radio frequency transmit signal of the first frequency band, and the radio frequency system receives the radio frequency receive signal of the second frequency band and outputs the radio frequency transmit signal of the second frequency band, which are independent of each other.

When the radio frequency system 30 outputs the radio frequency transmit signal of the first frequency band, the baseband chip 31 controls the radio frequency circuit 20-1 to operate in the working state 1, and the radio frequency circuit 20-2 to operate in the working state 1. The baseband chip 31 generates two baseband transmit signals of the first frequency band, and the radio frequency circuit 20-1 and the radio frequency circuit 20-2 each receive one baseband transmit signal of the first frequency band, and output one radio frequency transmit signal of the first frequency band. The radio frequency system 30 may finally output two radio frequency transmit signals of the first frequency band from the common antenna port 1 and the common antenna port 3.

When the radio frequency system 30 receives the radio frequency receive signal of the first frequency band, the baseband chip 31 controls the radio frequency circuit 20-1 to operate in a working state 3, and the radio frequency circuit 20-2 to operate in the working state 3. The radio frequency system 30 may receive two radio frequency receive signals of the first frequency band from the common antenna port 1 and the common antenna port 3. The radio frequency circuit 20-1 and the radio frequency circuit 20-2 each receive one radio frequency receive signal of the first frequency band, and output one baseband receive signal of the first frequency band to the baseband chip 31. The baseband chip 31 may finally receive two baseband receive signals of the first frequency band.

When the radio frequency system 30 outputs the radio frequency transmit signal of the second frequency band, the baseband chip 31 controls the radio frequency circuit 20-3 to operate in the working state 1, and the radio frequency circuit 20-4 to operate in the working state 1. The baseband chip 31 generates two baseband transmit signals of the second frequency band, and the radio frequency circuit 20-3 and the radio frequency circuit 20-4 each receive one baseband transmit signal of the second frequency band, and output one radio frequency transmit signal of the second frequency band. The radio frequency system 30 may finally output two radio frequency transmit signals of the second frequency band from the common antenna port 5 and the common antenna port 7.

When the radio frequency system 30 receives the radio frequency receive signal of the second frequency band, the baseband chip 31 controls the radio frequency circuit 20-3 to operate in the working state 3, and the radio frequency circuit 20-4 to operate in the working state 3. The radio frequency system 30 may receive two radio frequency receive signals of the second frequency band from the common antenna port 5 and the common antenna port 7. The radio frequency circuit 20-3 and the radio frequency circuit 20-4 each receive one radio frequency receive signal of the second frequency band, and output one baseband receive signal of the second frequency band to the baseband chip 31. The baseband chip 31 may finally receive two baseband receive signals of the second frequency band.

For example, the working mode 1 and the working mode 2 are also referred to as a single-frequency working mode of the radio frequency system 10, and the working mode 3 is also referred to as a dual-frequency working mode of the radio frequency system 30.

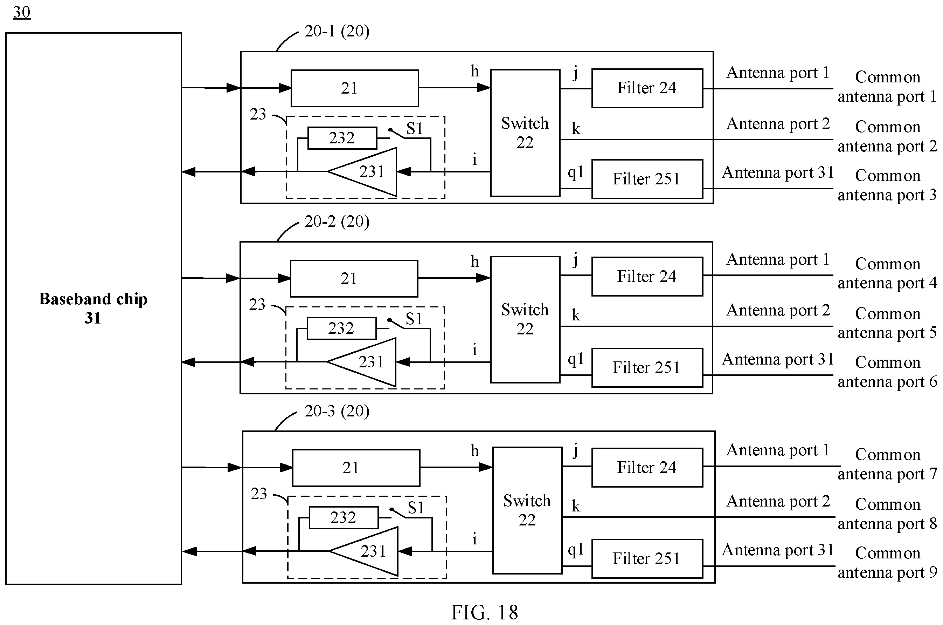

In some other embodiments, refer to FIG. 18. The radio frequency system 30 shown in FIG. 18 supports three-input and three-output. The radio frequency system 30 includes three radio frequency circuits 20: a radio frequency circuit 20-1, a radio frequency circuit 20-2, and a radio frequency circuit 20-3. Each radio frequency circuit 20 includes an antenna port 1, an antenna port 2, and an antenna port 3. The radio frequency system 30 includes nine common antenna ports. The antenna port 1 of the radio frequency circuit 20-1 is connected to a common antenna port 1, the antenna port 2 is connected to a common antenna port 2, and the antenna port 3 is connected to a common antenna port 3. The antenna port 1 of the radio frequency circuit 20-2 is connected to a common antenna port 4, the antenna port 2 is connected to a common antenna port 5, and the antenna port 3 is connected to a common antenna port 6. The antenna port 1 of the radio frequency circuit 20-3 is connected to a common antenna port 7, the antenna port 2 is connected to a common antenna port 8, and the antenna port 3 is connected to a common antenna port 9.

Frequency ranges of a filter 24 in the radio frequency circuit 20-1 and a filter 24 in the radio frequency circuit 20-3 are a first frequency band, frequency ranges of a filter 251 in the radio frequency circuit 20-1 and a filter 24 in the radio frequency circuit 20-2 are a second frequency band, and frequency ranges of a filter 251 in the radio frequency circuit 20-2 and a filter 251 in the radio frequency circuit 20-3 are a third frequency band. The radio frequency system 30 may receive the radio frequency receive signal of the first frequency band and output the radio frequency transmit signal of the first frequency band, and/or receive the radio frequency receive signal of the second frequency band and output the radio frequency transmit signal of the second frequency band, and/or receive the radio frequency receive signal of the third frequency band and output the radio frequency transmit signal of the third frequency band.

The radio frequency circuit 30 further includes a working state 6 (the end h and the end q1 of the switch 22 are connected) and a working state 7 (the end i and the end q1 of the switch 22 are connected).

The radio frequency system 30 shown in FIG. 18 may be in a single-frequency working mode. Outputting the radio frequency transmit signal is that the baseband chip 31 controls the radio frequency circuit 20-1 to operate in the working state 2, the radio frequency circuit 20-2 to operate in the working state 2, and the radio frequency circuit 20-3 to operate in the working state 2. Receiving the radio frequency receive signal is that the baseband chip 31 controls the radio frequency circuit 20-1 to operate in the working state 4, the radio frequency circuit 20-2 to operate in the working state 4, and the radio frequency circuit 20-3 to operate in the working state 4.

The radio frequency system 30 shown in FIG. 18 may be in a dual-frequency working mode. The dual frequency bands are the first frequency band and the second frequency band. In this case, the baseband chip 31 always controls the switch 22 of the radio frequency circuit 20-3 not to be turned on. Outputting the radio frequency transmit signal of the first frequency band is that the baseband chip 31 controls the radio frequency circuit 20-1 to operate in the working state 1, and receiving the radio frequency receive signal of the first frequency band is that the baseband chip 31 controls the radio frequency circuit 20-1 to operate in the working state 3. Outputting the radio frequency transmit signal of the second frequency band is that the baseband chip 31 controls the radio frequency circuit 20-2 to operate in the working state 1, and receiving the radio frequency receive signal of the second frequency band is that the baseband chip 31 controls the radio frequency circuit 20-2 to operate in the working state 3. The dual frequency bands are the first frequency band and the third frequency band. In this case, the baseband chip 31 always controls the switch 22 of the radio frequency circuit 20-3 not to be turned on. Outputting the radio frequency transmit signal of the first frequency band is that the baseband chip 31 controls the radio frequency circuit 20-1 to operate in the working state 1, and receiving the radio frequency receive signal of the first frequency band is that the baseband chip 31 controls the radio frequency circuit 20-1 to operate in the working state 3. Outputting the radio frequency transmit signal of the third frequency band is that the baseband chip 31 controls the radio frequency circuit 20-2 to operate in the working state 5, and receiving the radio frequency receive signal of the third frequency band is that the baseband chip 31 controls the radio frequency circuit 20-2 to operate in the working state 6. The dual bands are the second frequency band and the third frequency band. In this case, the baseband chip 31 always controls the switch 22 of the radio frequency circuit 20-1 not to be turned on. Outputting the radio frequency transmit signal of the second frequency band is that the baseband chip 31 controls the radio frequency circuit 20-2 to operate in the working state 1, and receiving the radio frequency receive signal of the second frequency band is that the baseband chip 31 controls the radio frequency circuit 20-2 to operate in the working state 3. Outputting the radio frequency transmit signal of the third frequency band is that the baseband chip 31 controls the radio frequency circuit 20-3 to operate in the working state 5, and receiving the radio frequency receive signal of the third frequency band is that the baseband chip 31 controls the radio frequency circuit 20-3 to operate in the working state 6.

Certainly, the foregoing is merely an embodiment, and any permutation and combination solution may be selected to implement the dual-frequency working mode.

The radio frequency system 30 shown in FIG. 18 may be in a tri-band working mode. Outputting the radio frequency transmit signal of the first frequency band is that the baseband chip 31 controls the radio frequency circuit 20-1 to operate in the working state 1, and receiving the radio frequency receive signal of the first frequency band is that the baseband chip 31 controls the radio frequency circuit 20-1 to operate in the working state 3. Outputting the radio frequency transmit signal of the second frequency band is that the baseband chip 31 controls the radio frequency circuit 20-2 to operate in the working state 1, and receiving the radio frequency receive signal of the second frequency band is that the baseband chip 31 controls the radio frequency circuit 20-2 to operate in the working state 3. Outputting the radio frequency transmit signal of the third frequency band is that the baseband chip 31 controls the radio frequency circuit 20-3 to operate in the working state 5, and receiving the radio frequency receive signal of the third frequency band is that the baseband chip 31 controls the radio frequency circuit 20-3 to operate in the working state 6.

For example, the radio frequency system 30 shown in FIG. 18 may further include more radio frequency circuits 20, so that the radio frequency system 30 shown in FIG. 18 can output a plurality of radio frequency transmit signals of a same frequency band and receive a plurality of radio frequency receive signals of the same frequency band. Alternatively, a multi-frequency working mode is implemented.

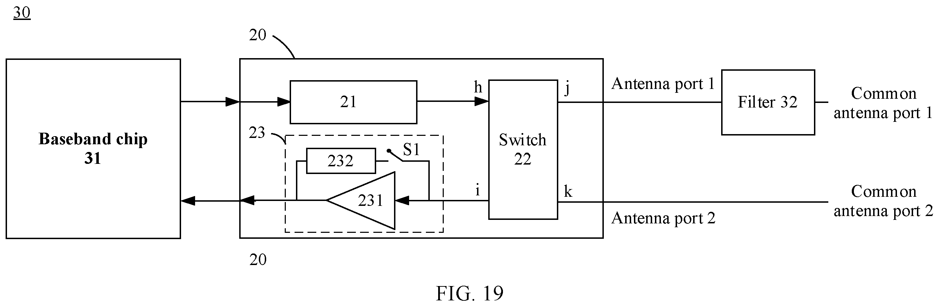

In some embodiments, refer to FIG. 19. Compared with that in the radio frequency system 30 shown in FIG. 16, the radio frequency circuit 20 in the radio frequency system 30 shown in FIG. 19 is specifically the radio frequency circuit 20 shown in FIG. 5. The radio frequency system 30 shown in FIG. 19 further includes a filter 32 (also referred to as a third filter), and common antenna ports of the radio frequency system 30 include a common antenna port 1 and a common antenna port 2. The antenna port 1 of the radio frequency circuit 20 is connected to the common antenna port 1 through the filter 32, and the antenna port 2 is connected to the common antenna port 2.

For example, when the filter 32 shown in FIG. 19 is completely the same as the filter 24 shown in FIG. 16, the radio frequency system 30 shown in FIG. 19 is equivalent to the radio frequency system 30 shown in FIG. 16. For specific functions of the radio frequency system 30, refer to FIG. 16. Details are not described herein again.

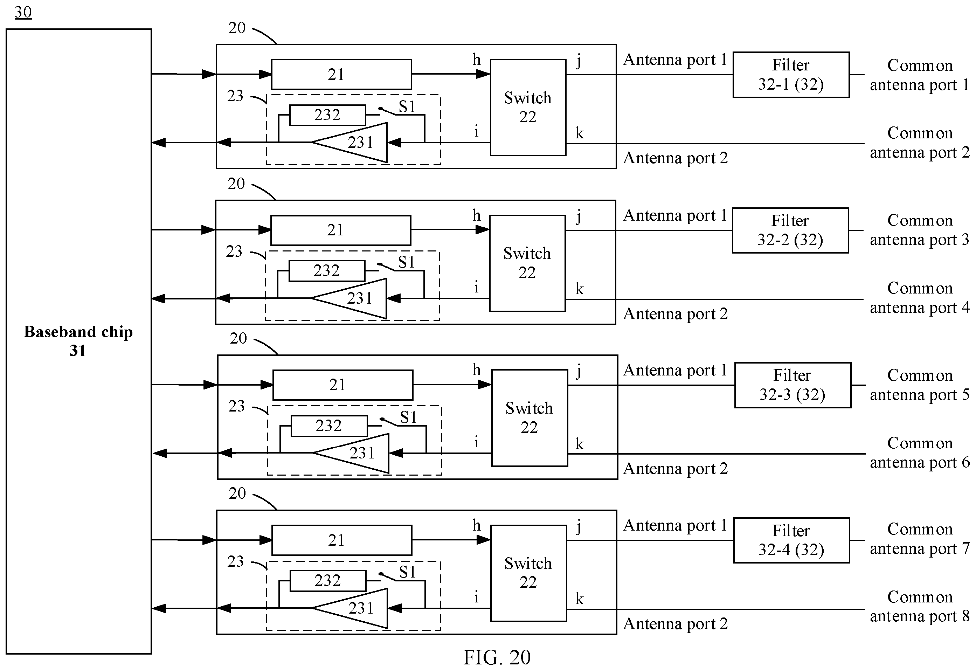

In some embodiments, refer to FIG. 20. The radio frequency system 30 shown in FIG. 20 supports four-input four-output. The radio frequency system 30 includes four radio frequency circuits 20: a radio frequency circuit 20-1, a radio frequency circuit 20-2, a radio frequency circuit 20-3, and a radio frequency circuit 20-4. The four radio frequency circuits 20 each are the radio frequency circuit 20 shown in FIG. 5, and the radio frequency system 30 includes eight common antenna ports and four filters 32. An antenna port 1 of the radio frequency circuit 20-1 is connected to a common antenna port 1 through a filter 32-1, and an antenna port 2 is connected to a common antenna port 2. An antenna port 1 of the radio frequency circuit 20-2 is connected to a common antenna port 3 through a filter 32-2, and an antenna port 2 is connected to a common antenna port 4. An antenna port 1 of the radio frequency circuit 20-3 is connected to a common antenna port 5 through a filter 32-3, and an antenna port 2 is connected to a common antenna port 6. An antenna port 1 of the radio frequency circuit 20-4 is connected to a common antenna port 7 through a filter 32-4, and an antenna port 2 is connected to a common antenna port 8.

Frequency ranges of the filter 32-1 and the filter 32-2 are a first frequency band, and frequency ranges of the filter 32-3 and the filter 32-4 are a second frequency band. The radio frequency system 30 shown in FIG. 20 is equivalent to the radio frequency system 30 shown in FIG. 17. For specific functions of the radio frequency system 30, refer to FIG. 17. Details are not described herein again.

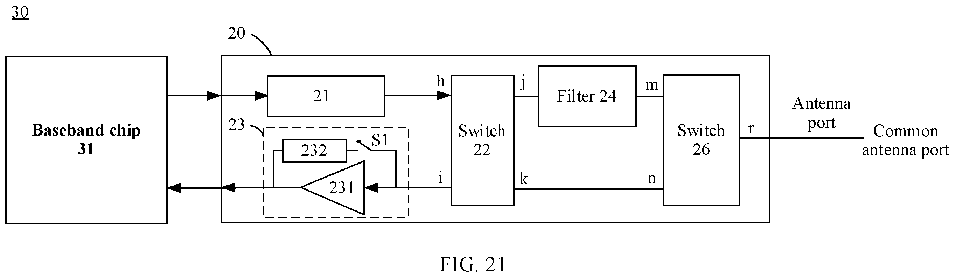

In some other embodiments, refer to FIG. 21. The radio frequency system 30 includes one common antenna port. The radio frequency circuit 20 may be specifically the radio frequency circuit 20 shown in FIG. 10. The radio frequency circuit 20 includes one antenna port, and the antenna port is connected to the common antenna port.

For example, in the radio frequency system 30 shown in FIG. 21, the control circuit in the baseband chip 31 is connected to the switch S1, the switch 22, and the switch 26 in the radio frequency circuit 20. When the radio frequency system 30 needs to output a filtered radio frequency transmit signal, the control circuit in the baseband chip 31 outputs a first control signal to the switch 22 and outputs a fifth control signal to the switch 26, so as to control the switch 22 to connect the end h to the end j of the switch 22 based on the first control signal, control the switch 26 to connect the end m to the end r of the switch 26 based on the fifth control signal, and control the radio frequency circuit 20 to operate in the working state 1. When the radio frequency system 30 needs to output a radio frequency transmit signal that is not filtered, the control circuit in the baseband chip 31 outputs a second control signal to the switch 22 and outputs a sixth control signal to the switch 26, so as to control the switch 22 to connect the end h to the end k of the switch 22 based on the second control signal, control the switch 26 to connect the end n to the end r of the switch 26 based on the sixth control signal, and control the radio frequency circuit 20 to operate in the working state 2. When the radio frequency system 30 needs to receive a filtered radio frequency receive signal, the control circuit in the baseband chip 31 outputs a third control signal to the switch 22 and outputs a fifth control signal to the switch 26, so as to control the switch 22 to connect the end i to the end j of the switch 22 based on the third control signal, control the switch 26 to connect the end m to the end r of the switch 26 based on the fifth control signal, and control the radio frequency circuit 20 to operate in the working state 3. When the radio frequency system 30 needs to receive a radio frequency receive signal that is not filtered, the control circuit in the baseband chip 31 outputs a fourth control signal to the switch 22 and outputs a sixth control signal to the switch 26, so as to control the switch 22 to connect the end i to the end k of the switch 22 based on the fourth control signal, control the switch 26 to connect the end n to the end r of the switch 26 based on the sixth control signal, and control the radio frequency circuit 20 to operate in the working state 4.

For example, for a process in which the radio frequency circuit 20 controls the switch S1, refer to the process in which the radio frequency circuit 20 controls the switch S1 described in FIG. 14. Details are not described herein again.

In some embodiments, the radio frequency circuit 20 shown in FIG. 21 may alternatively be the radio frequency circuit 20 shown in FIG. 11. This is not limited in embodiments of this application.

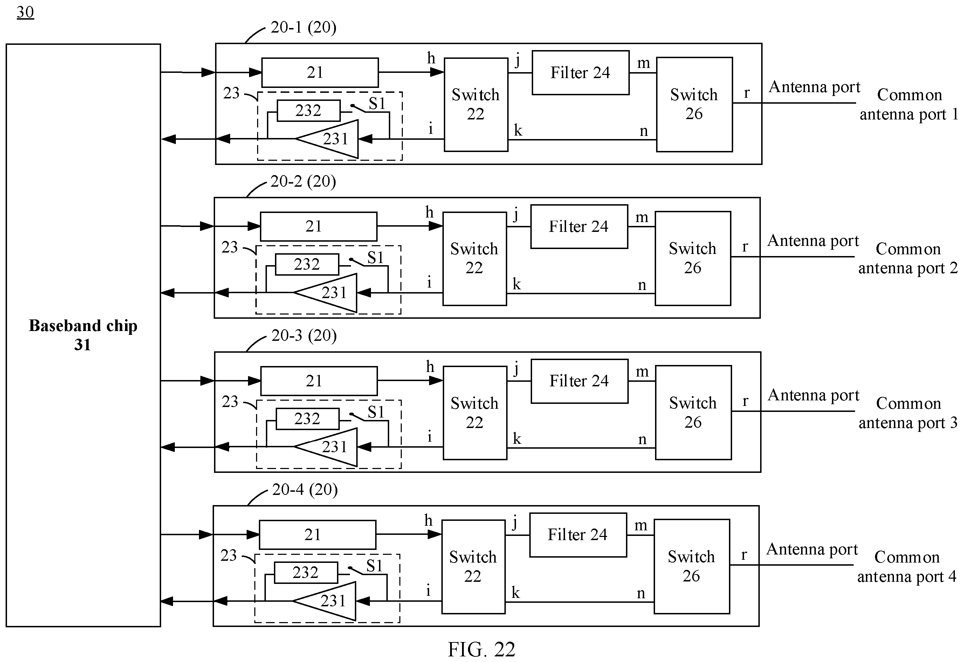

In some other embodiments, refer to FIG. 22. An embodiment of this application further provides a diagram of a structure of a radio frequency system 30. The radio frequency system 30 shown in FIG. 22 supports four-input four-output. The radio frequency system 30 includes four radio frequency circuits 20: a radio frequency circuit 20-1, a radio frequency circuit 20-2, a radio frequency circuit 20-3, and a radio frequency circuit 20-4. The four radio frequency circuits 20 each are the radio frequency circuit 20 shown in FIG. 10, and the radio frequency system 30 includes four common antenna ports. An antenna port of the radio frequency circuit 20-1 is connected to a common antenna port 1. An antenna port of the radio frequency circuit 20-2 is connected to a common antenna port 2. An antenna port of the radio frequency circuit 20-3 is connected to a common antenna port 3. An antenna port of the radio frequency circuit 20-4 is connected to a common antenna port 4.

Frequency ranges of a filter 24 in the radio frequency circuit 20-1 and a filter 24 in the radio frequency circuit 20-2 are a first frequency band, and frequency ranges of a filter 24 in the radio frequency circuit 20-3 and a filter 24 in the radio frequency circuit 20-4 are a second frequency band. The radio frequency system 30 may receive a radio frequency receive signal of the first frequency band and output a radio frequency transmit signal of the first frequency band, and/or receive a radio frequency receive signal of the second frequency band and output a radio frequency transmit signal of the second frequency band.

For example, the radio frequency system 30 receives the radio frequency receive signal of the first frequency band and outputs the radio frequency transmit signal of the first frequency band, or receives the radio frequency receive signal of the second frequency band and outputs the radio frequency transmit signal of the second frequency band. The radio frequency system 30 is in a single-frequency working mode. Outputting the radio frequency transmit signal is that the baseband chip 31 controls the radio frequency circuit 20-1 to operate in the working state 2, the radio frequency circuit 20-2 to operate in the working state 2, the radio frequency circuit 20-3 to operate in the working state 2, and the radio frequency circuit 20-4 to operate in the working state 2. Receiving the radio frequency receive signal is that the baseband chip 31 controls the radio frequency circuit 20-1 to operate in the working state 4, the radio frequency circuit 20-2 to operate in the working state 4, the radio frequency circuit 20-3 to operate in the working state 4, and the radio frequency circuit 20-4 to operate in the working state 4.

The radio frequency system 30 shown in FIG. 22 may be in a dual-frequency working mode. Outputting the radio frequency transmit signal of the first frequency band is that the baseband chip 31 controls the radio frequency circuit 20-1 to operate in the working state 1 and the radio frequency circuit 20-2 to operate in the working state 1, so that two radio frequency transmit signals of the first frequency band are output from the common antenna port 1 and the common antenna port 2. Receiving the radio frequency receive signal of the first frequency band is that the baseband chip 31 controls the radio frequency circuit 20-1 to operate in the working state 3 and the radio frequency circuit 20-2 to operate in the working state 3, so that two radio frequency receive signals of the first frequency band are received from the common antenna port 1 and the common antenna port 2. Outputting the radio frequency transmit signal of the second frequency band is that the baseband chip 31 controls the radio frequency circuit 20-3 to operate in the working state 1 and the radio frequency circuit 20-4 to operate in the working state 1, so that two radio frequency transmit signals of the second frequency band are output from the common antenna port 3 and the common antenna port 4. Receiving the radio frequency receive signal of the second frequency band is that the baseband chip 31 controls the radio frequency circuit 20-3 to operate in the working state 3 and the radio frequency circuit 20-4 to operate in the working state 3, so that two radio frequency receive signals of the second frequency band are received from the common antenna port 3 and the common antenna port 4.

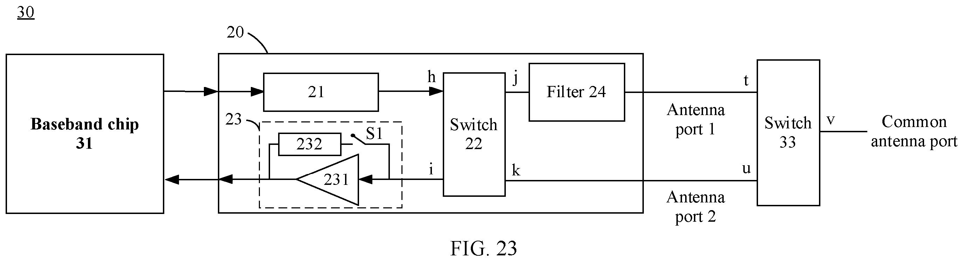

In some other embodiments, refer to FIG. 23. Based on the radio frequency system 20 shown in FIG. 16, a fourth switch (the switch 33 shown in FIG. 23) may be disposed, so that the radio frequency system 30 includes one common antenna port. For example, compared with the radio frequency circuit 20 shown in FIG. 16, the radio frequency circuit 20 shown in FIG. 23 further includes a switch 33 (also referred to as a fourth switch), where the switch 33 includes an end t (also referred to as a tenth end of the switch 33), an end u (also referred to as an eleventh end of the switch 33), and an end v (also referred to as a twelfth end of the switch 33). The radio frequency circuit 20 is specifically the radio frequency circuit 20 shown in FIG. 8, the radio frequency circuit 20 includes the filter 24, and antenna ports of the radio frequency circuit 20 include the antenna port 1 and the antenna port 2. The antenna port 1 is connected to the end t of the switch 33; the antenna port 2 is connected to the end u of the switch 33; and the end v of the switch 33 is connected to the common antenna port of the radio frequency system 30.

For example, in the radio frequency system 30 shown in FIG. 23, the control circuit in the baseband chip 31 is connected to the switch S1, the switch 22, and the switch 33 in the radio frequency circuit 20. When the radio frequency system 30 needs to output a filtered radio frequency transmit signal, the control circuit in the baseband chip 31 outputs a first control signal to the switch 22, to control the switch 22 to connect the end h to the end j of the switch 22 based on the first control signal, and control the radio frequency circuit 20 to operate in the working state 1. The control circuit in the baseband chip 31 further outputs a seventh control signal to the switch 33, to control the switch 33 to connect the end t to the end v of the switch 33 based on the seventh control signal. When the radio frequency system 30 needs to output a radio frequency transmit signal that is not filtered, the control circuit in the baseband chip 31 outputs a second control signal to the switch 22, to control the switch 22 to connect the end h to the end k of the switch 22 based on the second control signal, and control the radio frequency circuit 20 to operate in the working state 2. The control circuit in the baseband chip 31 further outputs an eighth control signal to the switch 33, to control the switch 33 to connect the end u to the end v of the switch 33 based on the eighth control signal. When the radio frequency system 30 needs to receive a filtered radio frequency receive signal, the control circuit in the baseband chip 31 outputs a third control signal to the switch 22, to control the switch 22 to connect the end i to the end j of the switch 22 based on the third control signal, and control the radio frequency circuit 20 to operate in the working state 3. The control circuit in the baseband chip 31 further outputs a seventh control signal to the switch 33, to control the switch 33 to connect the end t to the end v of the switch 33 based on the seventh control signal. When the radio frequency system 30 needs to receive a radio frequency receive signal that is not filtered, the control circuit in the baseband chip 31 outputs a fourth control signal to the switch 22, to control the switch 22 to connect the end i to the end k of the switch 22 based on the fourth control signal, and control the radio frequency circuit 20 to operate in the working state 4. The control circuit in the baseband chip 31 further outputs an eighth control signal to the switch 33, to control the switch 33 to connect the end t to the end u of the switch 33 based on the eighth control signal.

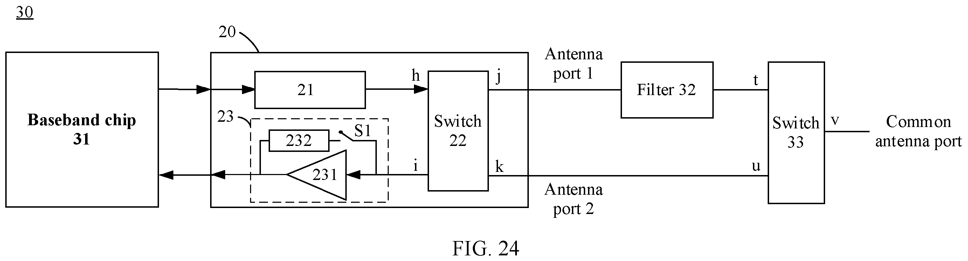

In some other embodiments, refer to FIG. 24. Based on the radio frequency system 20 shown in FIG. 19, a fourth switch may be disposed, so that the radio frequency system 30 includes one common antenna port. For example, compared with the radio frequency circuit 20 shown in FIG. 19, the radio frequency circuit 20 shown in FIG. 24 not only includes the filter 32, but also includes a switch 33 (also referred to as a fourth switch). The switch 33 includes an end t (also referred to as a tenth end of the switch 33), an end u (also referred to as an eleventh end of the switch 33), and an end v (also referred to as a twelfth end of the switch 33). The radio frequency circuit 20 is specifically the radio frequency circuit 10 shown in FIG. 5, and antenna ports of the radio frequency circuit 20 include the antenna port 1 and the antenna port 2. The antenna port 1 is connected to the end t of the switch 33 through the filter 32. The antenna port 2 is connected to the end u of the switch 33. The end v of the switch 33 is connected to the common antenna port of the radio frequency system 30.

For example, when the filter 32 shown in FIG. 24 is completely the same as the filter 24 shown in FIG. 23, the radio frequency system 30 shown in FIG. 24 is equivalent to the radio frequency system 30 shown in FIG. 23. For specific functions of the radio frequency system 30, refer to FIG. 23. Details are not described herein again.

For example, the radio frequency system shown in FIG. 23 or FIG. 24 may implement multiple-input multiple-output by disposing a plurality of radio frequency circuits 20. Details are not described herein again.

For example, an embodiment of this application further provides a communication device. The communication device includes an antenna and the radio frequency system 30 shown in any one of FIG. 16 to FIG. 18, where the antenna is connected to a common antenna port of the radio frequency system 30. Specifically, if the radio frequency system 30 includes X common antenna ports, the communication device includes X antennas, and one antenna is connected to a corresponding common antenna port of the radio frequency system 30.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A radio frequency circuit, comprising a power amplifier circuit, a low-noise amplifier circuit, and a first switch, wherein
the radio frequency circuit comprises a transmit port, a receive port, and an antenna port, and the first switch comprises a first end, a second end, a third end, and a fourth end;
the transmit port of the radio frequency circuit is connected to an input end of the power amplifier circuit, and the receive port of the radio frequency circuit is connected to an output end of the low-noise amplifier circuit;
an output end of the power amplifier circuit is connected to the first end of the first switch; an input end of the low-noise amplifier circuit is connected to the second end of the first switch; and
the third end and the fourth end of the first switch are separately connected to the antenna port of the radio frequency circuit.

2. The radio frequency circuit according to claim 1, wherein the antenna port comprises a first antenna port and a second antenna port;
the third end of the first switch is connected to the first antenna port of the radio frequency circuit; and
the fourth end of the first switch is connected to the second antenna port of the radio frequency circuit.

3. The radio frequency circuit according to claim 2, wherein
the first switch is configured to electrically connect the first end to the third end; and
the power amplifier circuit is configured to receive a first baseband transmit signal input through the transmit port, and output a first radio frequency transmit signal to the first antenna port based on the first baseband transmit signal; or
the first switch is configured to electrically connect the first end to the fourth end; and
the power amplifier circuit is configured to receive a second baseband transmit signal input through the transmit port, and output a second radio frequency transmit signal to the second antenna port based on the second baseband transmit signal; or
the first switch is configured to electrically connect the second end to the third end; and
the low-noise amplifier circuit is configured to receive a first radio frequency receive signal input through the first antenna port, and output a first baseband receive signal to the receive port based on the first radio frequency receive signal; or
the first switch is configured to electrically connect the second end to the fourth end; and
the low-noise amplifier circuit is configured to receive a second radio frequency receive signal input through the second antenna port, and output a second baseband receive signal to the receive port based on the second radio frequency receive signal.

4. The radio frequency circuit according to claim 2, wherein the antenna port further comprises at least one third antenna port, and the first switch further comprises at least one fifth end; and
one fifth end of the first switch is connected to a corresponding third antenna port of the radio frequency circuit.

5. The radio frequency circuit according to claim 4, wherein
the first switch is configured to electrically connect the first end to the one fifth end; and
the power amplifier circuit is configured to receive a third baseband transmit signal input through the transmit port, and output a third radio frequency transmit signal to the corresponding third antenna port based on the third baseband transmit signal; or
the first switch is configured to electrically connect the second end to the one fifth end; and
the low-noise amplifier circuit is configured to receive a third radio frequency receive signal input through the corresponding third antenna port, and output a third baseband receive signal to the receive port based on the third radio frequency receive signal.

6. The radio frequency circuit according to claim 2, wherein the radio frequency circuit further comprises a first filter; and
the third end of the first switch is connected to the first antenna port of the radio frequency circuit through the first filter.

7. The radio frequency circuit according to claim 6, wherein the radio frequency circuit further comprises at least one second filter, the antenna port further comprises at least one third antenna port, and the first switch further comprises at least one fifth end; and
one fifth end of the first switch is connected to a corresponding third antenna port of the radio frequency circuit through one second filter.

8. The radio frequency circuit according to claim 1, wherein the radio frequency circuit further comprises a first filter and a second switch;
the second switch comprises a sixth end, a seventh end, and an eighth end;
the third end of the first switch is connected to the sixth end of the second switch through the first filter;
the fourth end of the first switch is connected to the seventh end of the second switch; and
the eighth end of the second switch is connected to the antenna port of the radio frequency circuit.

9. The radio frequency circuit according to claim 8, wherein
the first switch is configured to electrically connect the first end to the third end;
the second switch is configured to electrically connect the eighth end to the sixth end;
the power amplifier circuit is configured to receive a first baseband transmit signal input through the transmit port, and output a first radio frequency transmit signal to the first filter based on the first baseband transmit signal; and
the first filter is configured to output the filtered first radio frequency transmit signal to the antenna port; or
the first switch is configured to electrically connect the first end to the fourth end;
the second switch is configured to electrically connect the eighth end to the seventh end; and
the power amplifier circuit is configured to receive a second baseband transmit signal input through the transmit port, and output a second radio frequency transmit signal to the antenna port based on the second baseband transmit signal; or
the first switch is configured to electrically connect the second end to the third end;
the second switch is configured to electrically connect the eighth end to the sixth end;
the first filter is configured to receive a first radio frequency receive signal input through the antenna port, and output the filtered first radio frequency receive signal to the low-noise amplifier circuit; and
the low-noise amplifier circuit is configured to output a first baseband receive signal to the receive port based on the first radio frequency receive signal; or
the first switch is configured to electrically connect the second end to the fourth end;
the second switch is configured to electrically connect the eighth end to the seventh end; and
the low-noise amplifier circuit is configured to receive a second radio frequency receive signal input through the antenna port, and output a second baseband receive signal to the receive port based on the second radio frequency receive signal.

10. The radio frequency circuit according to claim 8, wherein the radio frequency circuit further comprises at least one second filter;
the first switch further comprises at least one fifth end, and the second switch further comprises at least one ninth end; and
one fifth end of the first switch is connected to a corresponding ninth end of the second switch through one second filter.

11. The radio frequency circuit according to claim 10, wherein
the first switch is configured to electrically connect the first end to the one fifth end; and
the second switch is configured to electrically connect the eighth end to the corresponding ninth end;
the power amplifier circuit is configured to receive a third baseband transmit signal input through the transmit port, and output a third radio frequency transmit signal to the corresponding second filter based on the third baseband transmit signal; and
the corresponding second filter is configured to output the filtered third radio frequency transmit signal to the antenna port; or
the first switch is configured to electrically connect the second end to the one fifth end;
the second switch is configured to electrically connect the eighth end to the corresponding ninth end;
the corresponding second filter is configured to receive a third radio frequency receive signal input through the antenna port, and output the filtered third radio frequency receive signal to the low-noise amplifier circuit; and
the low-noise amplifier circuit is configured to output a third baseband receive signal to the receive port based on the third radio frequency receive signal.

12. The radio frequency circuit according to any one of claims 1 to 11, wherein the low-noise amplifier circuit comprises a low-noise amplifier, an attenuator, and a third switch;
the attenuator and the third switch are connected in series between the input end of the low-noise amplifier circuit and the output end of the low-noise amplifier circuit; and
the low-noise amplifier is connected between the input end of the low-noise amplifier circuit and the output end of the low-noise amplifier circuit.

13. A radio frequency system, comprising a baseband chip and at least one radio frequency circuit according to any one of claims 1 to 12, wherein the radio frequency system further comprises a common antenna port;
the baseband chip is connected to the transmit port and the receive port of the radio frequency circuit; and
the common antenna port of the radio frequency system is connected to the antenna port of the radio frequency circuit.

14. The radio frequency system according to claim 13, wherein
the common antenna port of the radio frequency system comprises a first common antenna port and a second common antenna port;
the antenna port of the radio frequency circuit comprises the first antenna port and the second antenna port; and
the first antenna port is connected to the first common antenna port, and the second antenna port is connected to the second common antenna port.

15. The radio frequency system according to claim 14, wherein the radio frequency system further comprises a third filter; and
the first antenna port is connected to the first common antenna port through the third filter.

16. The radio frequency system according to claim 13, wherein the radio frequency system further comprises a third filter and a fourth switch;
the fourth switch comprises a tenth end, an eleventh end, and a twelfth end;
the antenna port of the radio frequency circuit comprises the first antenna port and the second antenna port;
the first antenna port is connected to the tenth end of the fourth switch through the third filter;
the second antenna port is connected to the eleventh end of the fourth switch; and
the twelfth end of the fourth switch is connected to the common antenna port of the radio frequency system.

17. The radio frequency system according to claim 13, wherein the radio frequency system further comprises a fourth switch, and the fourth switch comprises a tenth end, an eleventh end, and a twelfth end;
the radio frequency circuit comprises the first filter, and the antenna port of the radio frequency circuit comprises the first antenna port and the second antenna port;
the first antenna port is connected to the tenth end of the fourth switch;
the second antenna port is connected to the eleventh end of the fourth switch; and
the twelfth end of the fourth switch is connected to the common antenna port of the radio frequency system.

18. A communication device, wherein the communication device comprises an antenna and the radio frequency system according to any one of claims 13 to 17; and
the antenna is connected to the common antenna port of the radio frequency system.
